(19) Europäisches Patentamt
European Patent Office
Office européen des brevets

(11) **EP 1 899 393 B1**

(12) **EUROPÄISCHE PATENTSCHRIFT**

(45) Veröffentlichungstag und Bekanntmachung des Hinweises auf die Patenterteilung:
**18.01.2012 Patentblatt 2012/03**

(51) Int Cl.:
*C08F 290/04* (2006.01)   *C08F 299/00* (2006.01)

(21) Anmeldenummer: 06724151.3

(22) Anmeldetag: **07.04.2006**

(86) Internationale Anmeldenummer:
**PCT/EP2006/003213**

(87) Internationale Veröffentlichungsnummer:
**WO 2007/003238 (11.01.2007 Gazette 2007/02)**

(54) **ÖLLÖSLICHE KAMMPOLYMERE**

OIL SOLUBLE COMB POLYMERS

POLYMERES EN PEIGNES SOLUBLES DANS L'HUILE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **01.07.2005 DE 102005031244**

(43) Veröffentlichungstag der Anmeldung:
**19.03.2008 Patentblatt 2008/12**

(73) Patentinhaber: **Evonik RohMax Additives GmbH 64293 Darmstadt (DE)**

(72) Erfinder:
• **STÖHR, Torsten**
**60326 Frankfurt/Main (DE)**

• **EISENBERG, Boris**
**64646 Heppenhelm-Scheuerberg (DE)**
• **MÜLLER, Michael**
**64625 Bensheim (DE)**

(56) Entgegenhaltungen:
**EP-A- 0 621 293    EP-A- 0 699 694**

Bemerkungen:
Die Akte enthält technische Angaben, die nach dem Eingang der Anmeldung eingereicht wurden und die nicht in dieser Patentschrift enthalten sind.

EP 1 899 393 B1

**Beschreibung**

Die vorliegende Anmeldung betrifft öllösliche Kammpolymere, Verfahren zu deren Herstellung sowie deren Verwendung

Polyalkyl(meth)acrylate (PAMAs) - im allgemeinen synthetisiert durch einfache radikalische Copolymerisation eines Gemisches verschiedener Alkylmethacrylate (AMAs) - bewirken als Öladditive in Abhängigkeit von Molekulargewicht und Zusammensetzung eine Anhebung des Viskositätsindex (VI) gepaart mit im Vergleich zu anderen Viskositätsindexverbesseren (VIIs) hervorragenden Tieftemperatureigenschaften (vgl. RM. Mortier, S.T. Orszulik (eds.), Chemistry and Technology of Lubricants, Blackie Academic & Professional, 1st ed., London 1993, 124-159 & 165-167). Grundvorrausetzung für die Anwendbarkeit als Öladditive ist trivialerweise die Öllöslichkeit des Polymeren, die im Falle der PAMAs auf der Anwesenheit einer ausreichend großen Anzahl an Alkylseitenketten mit typischerweise 6-24 Kohlenstoffatomen beruht. Zur Anhebung des VI von PAMA geht man häufig dazu über, kurzkettige Alkyl(meth)acrylate zu copolymerisieren, wie z.B. Methylmethacrylat oder Butylmethacrylat (vgl. EP 0 637 332, EP 0 937 769 oder EP 0 979 834). Durch die kurzkettige Komponente wird jedoch die Löslichkeit bei tiefen Temperaturen herabgesetzt, so dass der Anteil beispielsweise an Methylmethacrylat auf etwa 25wt% beschränkt bleibt. Die so erreichbaren VIs dieser kammartigen Polymere liegen abhängig von Konzentration, permanentem Scherstabilitäts-Index (PSSI und Grundöltyp im Bereich zwischen 150 und 250.

Eine weitere Klasse von VIIs ist mit den Styrol-Alkylmaleat-Copolymeren gegeben, die durch polymeranaloge Veresterung von Styrol-Maleinsäureanhydrid-Copolymeren mit typischerweise C6-C24 Akoholen gewonnen werden. Die Veresterung wird unter Zugabe von Butanol zu einem Umsatz von etwa 95% getrieben. Vollständiger Umsatz der Säurefunktionalitäten ist durch Zugabe eines Amines unter Bildung von amidischen oder imidischen Gruppen möglich (US 3 702 300, EP 0 969 077).

Die Viskositäten von Polymerlösungen in Mineralölen oder synthetischen Ölen sind in hohem Maße vom Molekulargewicht abhängig. Dies hat auch zur Folge, dass die Temperaturabhängigkeit der Viskosität abnimmt bzw. der VI mit steigendem Molekulargewicht zunimmt (J. Bartz, Additive für Schmierstoffe, Expert-Verlag, Renningen-Malmsheim 1994, 197-252). Im Zusammenhang mit der Temperaturerhöhung wird auch von einer Entknäuelung vom kollabierten Knäuel zum ausgedehnten wurmartigen Molekül gesprochen.

Parallel mit dem Molekulargewicht nimmt die Scherstabilität durch Kettenbruch unter hohem Schergefälle jedoch ab. Als Folge dieses gegenläufigen Effektes sind scherstabile VIIs wie sie für manuelle Getriebe-, Automatikgetriebe-, Hydraulikoder Motorenöle gefragt sind, auf Basis konventioneller Polymertypen wie den PAMAs nur mit hohen Zusatzmengen realisierbar. VIIs mit niedrigem Viskositätsbeitrag bei tiefen Temperaturen, normaler Verdickung im VI-Bereich von 40 bis 100°C, hohem Viskositätsbeitrag oberhalb von 100°C und gleichzeitig gewährleisteter guter Öllöslichkeit im gesamten Temperaturbereich sind somit von besonderem Interesse.

Neben linearen kammartigen Polymeren wie den PAMAs sind auch VIIs auf Basis von echten Kammpolymeren in der Patentliteratur bereits bekannt. Die EP 0 744 457 beschreibt Kammpolymere höherer Ordnung auf reiner PAMA-Basis, bei denen die Seitenarme selbst aus oligomerem PAMA bestehen. Zudem kennt die Patentliteratur zwei weitere Patente zu Kammpolymeren, bei denen die Seitenketten aus gesättigten bzw. hydrierten Polyolefinen und das Rückgrat aus kurzkettigen Monomeren wie AMAs oder Alkylstyrolen bestehen. So beschreibt die EP 0 621 293 Kammpolymere bei denen die Seitenketten bevorzugt aus hydriertem Polybutadien aufgebaut sind. Gleichermaßen werden in der EP 0 699 694 Kammpolymere mit Seitenarmen bevorzugt auf Basis von gesättigten Olefinmonomeren wie zum Beispiel dem Polyisobutylen oder ataktischem Polypropylen dargestellt.

In weitesten Sinne sind auch A-B-A Triblockcopolymere Kammpolymere mit lediglich zwei Seitenarmen anzusehen. So wurden Triblockcopolymere als VII auf reiner PAMA-Basis (P. Callais, S. Schmidt, N. Macy, SAE Technical Paper Series, No. 2004-01-3047) als auch auf Basis eines Polybutylmethacrylatkerns und hydrierten Polybutadien- oder Polyisoprenarmen bereits beschrieben (US 5 002 676). Anionisch hergestellte A-B-A Blockcopolymere mit Polystyrolkern und beispielsweise hydriertem Polyisoprenarmen finden sogar kommerzielle Verwendung als VIIs (US 4 788 361). Derartige VIIs werden auch der Klasse der hydrierten Styrol-Dien-Copolymere zugeordnet.

Neben der oben beschriebenen Anwendung als VII sind auch Kammpolymere mit hydrierten bzw. gesättigten Seitenarmen in gänzlich anderen Anwendungen bekannt. So beschreibt die DE 196 31 170 Kammpolymere für schlagzähe Formassen, wobei die Polymeren eine Aneinanderreihung von Polyisobutylenhaltigen Makromonomeren ohne zusätzliche kurzkettige Rückgratmonomere darstellen. Auch ist in der Patentliteratur ein Weg beschrieben, an ein Styrol-Maleinsäureanhydrid-Rückgrat in einer polymeranaloger Reaktion ein funktionalisiertes Polypropylen unter Bildungen eines weichen hochdämpfenden Kammpolymer-Gels zu knüpfen (EP 0 955 320); die Molekulargewichte der verwendeten Polypropylen liegen dabei äußerst hoch bis hin zu 300 000g/mol. In einem Beispiel aus der Chemie der Haftklebstoffe werden Kammpolymere mit hydrierten Polybutadien- oder Isoprenarmen beschrieben, wobei das Rückgrat neben AMAs auch Acrylsäure enthält (US 5 625 005).

Die zuvor dargelegten Polymere werden vielfach kommerziell eingesetzt. Dementsprechend zeigen die meisten dieser Polymere ein befriedigendes Eigenschaftsprofil. Allerdings besteht ein dauerhaftes Bestreben die Relation von Verdickungswirkung, Viskositätsindex und Scherstabilität zu verbessern, um bei möglichst geringem Einsatz an Additiv in Schmierölen über einen weiten Temperaturbereich eine gewünschte Viskosität zu erzielen, ohne dass diese Eigenschaft durch vorzeitigen Abbau der Polymere beeinträchtigt wird.

Des weiteren sollten die Polymere einfach und kostengünstig hergestellt werden können, wobei insbesondere kommerziell erhältliche Komponenten eingesetzt werden sollten. Hierbei sollte die Produktion großtechnisch erfolgen können, ohne dass hierzu neue oder konstruktiv aufwendige Anlagen benötigt werden.

Gelöst werden diese sowie weitere nicht explizit genannten Aufgaben, die jedoch aus den hierin einleitend diskutierten Zusammenhängen ohne weiteres ableitbar oder erschließbar sind, durch Kammpolymere mit allen Merkmalen des Patentanspruchs 1. Zweckmäßige Abwandlungen der erfindungsgemäßen Kammpolymere werden in den auf Anspruch 1 rückbezogenen Unteransprüchen unter Schutz gestellt. Hinsichtlich des Verfahrens zur Herstellung von Kammpolymeren liefert Anspruch 17 eine Lösung der zugrunde liegenden Aufgabe, während Anspruch 25 eine Schmierölzusammensetzung umfassend die Kammpolymere der vorliegenden Erfindung schützt.

Dadurch, dass der molare Verzweigungsgrad im Bereich von 0,1 bis 10 Mol.-% liegt und das Kammpolymer in Summe mindestens 80 Gew.-% an Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind, bezogen auf das Gewicht der Wiederholungseinheiten, umfasst, gelingt es auf nicht ohne weiteres vorhersehbare Weise Kammpolymer umfassend in der Hauptkette Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind und deren Hauptkette eine Glastemperatur im Bereich -30 bis 100°C aufweist, zur Verfügung zu stellen, die eine geringe Scherempfindlichkeit bei einer hohen Verdickungswirkung aufweisen.

Zugleich lassen sich durch die erfindungsgemäßen Kammpolymere eine Reihe weiterer Vorteile erzielen. Hierzu gehören unter anderem:

➢ Die erfindungsgemäßen Kammpolymere weisen in Schmierölen eine besonders hohe viskositätsindexverbessernde Wirkung auf.

➢ Die Kammpolymere der vorliegenden Erfindung können besonders leicht und einfach hergestellt werden. Hierbei können übliche, großtechnische Anlagen eingesetzt werden.

Der hierin verwendete Begriff Kammpolymer ist an sich bekannt, wobei an eine polymere Hauptkette, häufig auch Rückgrat oder "backbone" genannt, längere Seitenketten gebunden sind. Im vorliegenden Fall weisen die erfindungsgemäßen Polymere mindestens eine Wiederholungseinheit auf, die von Polyolefin-basierten Makromonomeren abgeleitet ist. Der genaue Anteil ergibt sich über den molaren Verzweigungsgrad. Der Begriff "Hauptkette" bedeutet nicht zwangsläufig, dass die Kettenlänge der Hauptkette größer ist als die der Seitenketten. Vielmehr bezieht sich dieser Begriff auf die Zusammensetzung dieser Kette. Während die Seitenkette sehr hohe Anteile an olefinischen Wiederholungseinheiten, insbesondere Einheiten, die von Alkenen oder Alkadienen, beispielsweise Ethylen, Propylen, n-Buten, Isobuten, Butadien, Isopren abgeleitet sind, aufweist, umfasst die Hauptkette größere Anteile an polareren ungesättigten Monomeren, die zuvor dargelegt wurden.

Der Begriff Wiederholungseinheit ist in der Fachwelt weithin bekannt. Die vorliegenden Kammpolymere können vorzugsweise über radikalische Polymerisation von Makromonomeren und niedermolekularen Monomeren erhalten werden. Hierbei werden Doppelbindungen unter Bildung von kovalenten Bindungen geöffnet. Dementsprechend ergibt sich die Wiederholungseinheit aus den eingesetzten Monomeren. Allerdings können die vorliegenden Kammpolymere auch durch polymeranaloge Umsetzungen und/oder Pfropfcopolymerisation erhalten werden. In diesem Fall zählt die umgesetzte Wiederholungseinheit der Hauptkette zur Wiederholungseinheit, die von einem Polyolefin-basierten Makromonomeren abgeleitet ist. Ähnliches gilt bei der Herstellung der erfindungsgemäßen Kammpolymeren durch Pfropfcopolymerisation.

Die vorliegende Erfindung beschreibt Kammpolymere, die vorzugsweise eine hohe Öllöslichkeit aufweisen. Der Begriff öllöslich bedeutet, dass eine Mischung von einem Grundöl und einem erfindungsgemäßen Kammpolymer ohne makroskopisch Phasenbildung herstellbar ist, die mindestens 0,1 Gew.-%, vorzugsweise mindestens 0,5 Gew.-% der erfindungsgemäßen Kammpolymere aufweist. In dieser Mischung kann das Kammpolymer dispergiert und/oder gelöst vorliegen. Die Öllöslichkeit hängt insbesondere vom Anteil der lipophilen Seitenketten sowie vom Grundöl ab. Diese Eigenschaft ist dem Fachmann bekannt und kann für das jeweilige Grundöl leicht über den Anteil an lipophilen Monomeren eingestellt werden.

Die erfindungsgemäßen Kammpolymere umfassen Wiederholungseinheiten, die von Polyolefin-basierten Makromonomere abgeleitet sind. Polyolefin-basierte Makromonomere sind in der Fachwelt bekannt. Diese Wiederholungseinheiten umfassen mindestens eine Gruppe, die von Polyolefinen abgeleitet ist. Polyolefine sind in der Fachwelt bekannt, wobei diese durch Polymerisation von Alkanen und/oder Alkadienen, die aus den Elementen Kohlenstoff und Wasserstoff bestehen, beispielsweise C2-C10-Alkene wie Ethylen, Propylen, n-Buten, Isobuten, Norbomen und/oder C4-C10-Alkadiene wie Butadien, Isopren, Norbomadien, erhalten werden können. Die von Polyolefin-basierten Makromonomeren abgeleiteten Wiederholungseinheiten umfassen vorzugsweise mindestens 70 Gew.-% und besonders bevorzugt mindestens 80 Gew.-% und ganz besonders bevorzugt mindestens 90 Gew.-% an Gruppen die von Alkenen und/oder Alkadienen abgeleitet sind, bezogen auf das Gewicht der von Polyolefin-basierten Makromonomeren abgeleiteten Wiederholungseinheiten. Hierbei können die polyolefinischen Gruppen insbesondere auch hydriert vorliegen. Neben den Gruppen, die von Alkenen und/oder Alkadienen abgeleitet sind, können die von Polyolefin-basierten Makromonomeren abgeleiteten Wiederholungseinheiten weitere Gruppen umfassen. Hierzu gehören geringe Anteile an copolymerisierbaren Monomeren. Diese Monomeren sind an sich bekannt und umfassen unter anderem Alkyl(meth)acrylate, Styrolmonomere, Fumarate, Maleate, Vinylester und/oder Vinylether. Der Anteil dieser auf copolymerisierbaren Monomeren basierten Gruppen beträgt vorzugsweise höchstens 30 Gew.-%, höchstens 20 Gew.-% oder besonders bevorzugt höchstens 15 Gew.-%, bezogen auf das Gewicht der von Polyolefin-basierten Makromonomeren abgeleiteten Wiederholungseinheiten. Des Weiteren können die von Polyolefin-basierten Makromonomeren abgeleiteten Wiederholungseinheiten Anfangsgruppen und/oder Endgruppen umfassen, die zur Funktionalisierung dienen oder durch die Herstellung der von Polyolefin-basierten Makromonomeren abgeleiteten Wiederholungseinheiten bedingt sind. Der Anteil dieser Anfangsgruppen und/oder Endgruppen beträgt vorzugsweise höchstens 30 Gew.-%, besonders bevorzugt höchstens 15 Gew.-%, bezogen auf das Gewicht der von Polyolefin basierten Makromonomeren abgeleiteten Wiederholungseinheiten.

Vorzugsweise liegt das Zahlenmittel des Molekulargewicht der Wiederholungseinheiten, die von Polyolefin-basierten Makromonomeren abgeleitet sind, im Bereich von 500 bis 50000 g/mol, besonders bevorzugt 700 bis 10000 g/mol, insbesondere 1500 bis 4900 g/mol und ganz besonders bevorzugt 2000 bis 3000 g/mol.

Diese Werte ergeben sich im Falle der Herstellung der Kammpolymere über die Copolymerisation von niedermolekularen und makromolekularen Monomeren über die Eigenschaften der makromolekularen Monomeren. Im Falle der polymeranalogen Umsetzungen ergibt sich diese Eigenschaft beispielsweise aus den eingesetzten Makroalkoholen und/oder Makroaminen unter Berücksichtigung der umgesetzten Wiederholungseinheiten der Hauptkette. Im Falle der Pfropfcopolymerisationen kann über den Anteil an gebildeten Polyolefinen, der nicht in die Hauptkette eingebaut wurde, auf die Molekulargewichtsverteilung des Polyolefins geschlossen werden.

Die Wiederholungseinheiten, die von Polyolefin-basierten Makromonomeren abgeleitet sind, wiesen vorzugsweise eine niedrige Schmelztemperatur auf, wobei diese über DSC gemessen wird. Bevorzugt ist die Schmelztemperatur der von den Polyolefin-basierten Makromonomeren abgeleiteten Wiederholungseinheiten kleiner oder gleich -10°C, insbesondere bevorzugt kleiner oder gleich -20°C, besonders bevorzugt kleiner oder gleich -40°C. Ganz besonders bevorzugt kann keine Schmelztemperatur gemäß DSC bei den Wiederholungseinheiten, die von den Polyolefin-basierten Makromonomeren abgeleitet sind, gemessen werden.

Neben den Wiederholungseinheiten, die von den Polyolefin-basierten Makromonomeren abgeleitet sind, umfassen die erfindungsgemäßen Kammpolymere Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind. Diese Monomeren sind in der Fachwelt weithin bekannt.

Der Ausdruck "niedermolekular" verdeutlicht, dass ein Teil der Wiederholungseinheiten des Rückgrats des Kammpolymeren ein geringes Molekulargewicht aufweist. Dies Molekulargewicht kann sich, je nach Herstellung, aus dem Molekulargewicht der zur Herstellung der Polymeren verwendeten Monomeren ergeben. Das Molekulargewicht der niedermolekularen Wiederholungseinheiten bzw. der niedermolekularen Monomeren beträgt vorzugsweise höchstens 400 g/mol, besonders bevorzugt höchstens 200 g/mol und ganz besonders bevorzugt höchstens 150 g/mol.

Beispiele für Styrolmonomere mit 8 bis 17 Kohlenstoffatomen sind Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole.

Der Begriff "(Meth)acrylate" umfasst Acrylate und Methacrylate sowie Mischungen von Acrylaten und Methacrylaten. Zu den Alkyl(meth)acrylaten mit 1 bis 10 Kohlenstoffatomen in der Alkoholgruppe gehören insbesondere (Meth)acrylate, die sich von gesättigten Alkoholen ableiten, wie Methyl(meth)acrylat, Ethyl(meth)acrylat, n-Propyl(meth)acrylat, iso-Propyl(meth)acrylat, n-Butyl(meth)acrylat, tert-Butyl(meth)acrylat, Pentyl(meth)acrylat, Hexyl(meth)acrylat, 2-Ethylhexyl(meth)acrylat, Heptyl(meth)acrylat, 2-tert.-Butylheptyl(meth)acrylat, Octyl(meth)acrylat, 3-iso-Propylheptyl(meth)acrylat, Nonyl(meth)acrylat, Decyl(meth)acrylat; (Meth)acrylate, die sich von ungesättigten Alkoholen ableiten, wie z. B. 2-Propinyl(meth)acrylat, Allyl(meth)acrylat, Vinyl(meth)acrylat, Oleyl(meth)acrylat; Cycloalkyl(meth)acrylate, wie Cyclopentyl(meth)acrylat, 3-Vinylcyclohexyl(meth)acrylat.

Bevorzugte Alkyl(meth)acrylate umfassen 1 bis 8, besonders bevorzugt 1 bis 4 Kohlenstoffatomen in der Alkoholgruppe. Die Alkoholgruppe kann hierbei linear oder verzweigt sein.

Beispiele für Vinylester mit 1 bis 11 Kohlenstoffatomen in der Acylgruppe sind unter anderem Vinylformiat, Vinylacetat, Vinylpropionat, Vinylbutyrat, Bevorzugte Vinylester umfassen 2 bis 9, besonders bevorzugt 2 bis 5 Kohlenstoffatomen in der Acylgruppe. Die Acylgruppe kann hierbei linear oder verzweigt sein.

Beispiele für Vinylether mit 1 bis 10 Kohlenstoffatomen in der Alkoholgruppe sind unter anderem Vinylmethylether, Vinylethylether, Vinylpropylether, Vinylbutylether. Bevorzugte Vinylether umfassen 1 bis 8, besonders bevorzugt 1 bis 4 Kohlenstoffatomen in der Alkoholgruppe. Die Alkoholgruppe kann hierbei linear oder verzweigt sein.

Die Schreibweise (Di)ester bedeutet, dass Monoester, Diester sowie Mischungen von Estern, insbesondere der Fumarsäure und/oder der Maleinsäure eingesetzt werden können. Zu den (Di)alkylfumaraten mit 1 bis 10 Kohlenstoffatomen in der Alkoholgruppe gehören unter anderem Monomethylfumarat, Dimethylfumarat, Monoethylfumarat, Diethylfumarat, Methylethylfumarat, Monobutylfumarat, Dibutylfumarat, Dipentylfumarat und Dihexylfumarat. Bevorzugte (Di)alkylfumarate umfassen 1 bis 8, besonders bevorzugt 1 bis 4 Kohlenstoffatomen in der Alkoholgruppe. Die Alkoholgruppe kann hierbei linear oder verzweigt sein.

Zu den (Di)alkylmaleaten mit 1 bis 10 Kohlenstoffatomen in der Alkoholgruppe gehören unter anderem Monomethylmaleat, Dimethylmaleat, Monoethylmaleat, Diethylmaleat, Methylethylmaleat, Monobutylmaleat, Dibutylmaleat. Bevorzugte (Di) alkylmaleate umfassen 1 bis 8, besonders bevorzugt 1 bis 4 Kohlenstoffatomen in der Alkoholgruppe. Die Alkoholgruppe kann hierbei linear oder verzweigt sein.

Neben den zuvor dargelegten Wiederholungseinheiten können die erfindungsgemäßen Kammpolymere weitere Wiederholungseinheiten umfassen, die von weiteren Comonomeren abgeleitet sind, wobei deren Anteil höchstens 20 Gew.-%, bevorzugt höchstens 10 Gew.-% und besonders bevorzugt höchstens 5 Gew.-%, bezogen auf das Gewicht der Wiederholungseinheiten, beträgt.

Hierzu gehören unter anderem auch Wiederholungseinheiten, die von Alkyl(meth)acrylaten mit 11 bis 30 Kohlenstoffatomen in der Alkoholgruppe abgeleitet sind, insbesondere Undecyl(meth)acrylat, 5-Methylundecyl(meth)acrylat, Dodecyl(meth)acrylat, 2-Methyldodecyl(meth)acrylat, Tridecyl(meth)acrylat, 5-Methyltridecyl(meth)acrylat, Tetradecyl (meth)acrylat, Pentadecyl(meth)acrylat, Hexadecyl(meth)acrylat, 2-Methylhexadecyl(meth)acrylat, Heptadecyl(meth) acrylat, 5-iso-Propylheptadecyl(meth)acrylat, 4-tert.-Butyloctadecyl(meth)acrylat, 5-Ethyloctadecyl(meth)acrylat, 3-iso-Propyloctadeeyl(meth)acrylat; Octadecyl(meth)acrylat, Nonadecyl(meth)acrylat, Eicosyl(meth)acrylat, Cetyleicosyl(meth)acrylat, Stearyleicosyl(meth)acrylat, Docosyl(meth)acrylat und/oder Eicosyltetratriacontyl(meth)acrylat.

Hierzu gehören unter anderem auch Wiederholungseinheiten, die von dispergierenden sauerstoff- und stickstoff-funktionalisierten Monomeren abgeleitet sind, wie im folgenden beispielhaft aufgezählt:

Dazu gehören unter anderem Wiederholungseinheiten, die von Aminoalkyl(meth)acrylaten abgeleitet sind, wie N,N-Dimethylaminoethyl(meth)acrylat,

N,N-Dimethylaminopropyl(meth)acrylat,

N,N-Diethylaminopentyl(meth)acrylat,

N,N-Dibutylaminohexadecyl(meth)acrylat.

Dazu gehören unter anderem Wiederholungseinheiten, die von Aminoalkyl(meth)acrylamiden abgeleitet sind, wie

N,N-Dimethylaminopropyl(meth)acrylamid.

Dazu gehören unter anderem Wiederholungseinheiten, die von Hydroxylalkyl(meth)acrylaten abeleitet sind, wie 3-Hydroxypropyl(meth)acrylat,

3,4-Dihydroxybutyl(meth)acrylat,

2-Hydroxyethyl(meth)acrylat,

2-Hydroxypropyl(meth)acrylat,

2,5-Dimethyl-1,6-hexandiol(meth)acrylat,

1,10-Decandiol(meth)acrylat.

Dazu gehören unter anderem Wiederholungseinheiten, die von heterocyclischen (Meth)acrylaten abgeleitet sind, wie

2-(1-Imidazolyl)ethyl(meth)acrylat

2-(4-Morpholinyl)ethyl(meth)acrylat

1-(2-Methacryloyloxyethyl)-2-pyrrolidon,

N-Methacryloylmorpholin,

N-Methacryloyl-2-pyrrolidinon,
N-(2-Methacryloyloxyethyl)-2-pyrrolidinon,
N-(3-Methacryloyloxypropyl)-2-pyrrolidinon.

Dazu gehören unter anderem Wiederholungseinheiten, die von heterocyclischen Vinylverbindungen abgeleitet sind, wie 2-Vinylpyridin, 4-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, N-Vinylpyrrolidin, 3-Vinylpyrrolidin, N-Vinylcaprolactam, N-Vinylbutyrolactam, Vinyloxolan, Vinylfuran, Vinyloxazole und hydrierte Vinyloxazole.

Die zuvor genannten ethylenisch ungesättigten Monomere können einzeln oder als Mischungen eingesetzt werden. Es ist des Weiteren möglich, die Monomerzusammensetzung während der Polymerisation der Hauptkette zu variieren, um definierte Strukturen, wie beispielsweise Blockcopolymere, zu erhalten.

Erfindungsgemäß weisen die Kammpolymere einen molaren Verzweigungsgrad im Bereich von 0,1 bis 10 Mol-%, vorzugsweise 0,8 bis 6 Mol-%, besonders bevorzugt 0,8 bis 3,4 Mol-% und insbesondere bevorzugt 1,0 bis 3,1 und ganz besonders bevorzugt 1,4 bis 2,8 auf. Der molare Verzweigungsgrad des Kammpolymeren $f_{branch}$ berechnet sich gemäß der Formel

$$f_{branch} = \frac{\sum_{a=1}^{A} n_a}{\sum_{a=1}^{A} n_a + \sum_{b=1}^{B} n_b}$$

mit

A = Typenzahl an Wiederholungseinheiten, die von Polyolefin-basierten Makromonomeren abgeleitet sind,

B = Typenzahl an Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind,

$n_a$ = Anzahl der Wiederholungseinheiten, die von Polyolefin-basierten Makromonomeren abgeleitet sind, vom Typ a im Kammpolymermolekül

$n_b$ = Anzahl der Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind, vom Typ b im Kammpolymermolekül

Der molare Verzweigungsgrad ergibt sich im Allgemeinen aus dem Verhältnis der eingesetzten Monomeren, falls das Kammpolymer durch Copolymerisation von niedermolekularen und makromolekularen Monomeren hergestellt wurde. Zur Berechnung kann hierbei das Zahlenmittel des Molekulargewichts des Makromonomeren eingesetzt werden.

Gemäß der vorliegenden Erfindung weist die Hauptkette des Kammpolymers eine Glasübergangstemperatur im Bereich -30 bis 100°C, bevorzugt im Bereich 0 bis 90°C und besonders bevorzugt im Bereich 20 bis 80°C auf. Die Glasübergangstemperatur wird per DSC bestimmt. Die Glasübergangstemperatur kann über die Glastemperatur der entsprechenden Homopolymere unter Berücksichtung der Anteile der Wiederholungseinheiten in der Hauptkette abgeschätzt werden.

Falls das Kammpolymer durch polymeranaloge Umsetzung oder durch Pfropfcopolymerisation erhalten wurde, ergibt sich der molare Verzweigungsgrad über bekannte Methoden zur Bestimmung des Umsatzes.

Der Anteil von mindestens 80 Gew.-%, vorzugsweise mindestens 90 Gew.-% an niedermolekularen Wiederholungseinheiten, die von Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind und von Wiederholungseinheiten, die von Polyolefin-basierten Makromonomeren abgeleitet sind, bezieht sich auf das Gewicht der Wiederholungseinheiten. Neben den Wiederholungseinheiten umfassen Polymere im Allgemeinen des weiteren Anfangs- und Endgruppen, die durch Initiierungsreaktionen und Abbruchreaktionen entstehen können. Gemäß einem besonderen Aspekt der vorliegenden Erfindung bezieht sich daher die Angabe von mindestens 80 Gew.-%, vorzugsweise mindestens 90 Gew.-% an niedermolekularen Wiederholungseinheiten, die von Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di) alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind und von Wiederholungseinheiten, die von Polyolefin-basierten Makromonomeren abgeleitet sind, auf das Gesamtgewicht der Kammpolymeren. Dem Fachmann ist die Polydispersität der Kammpolymere offensichtlich. Daher beziehen sich diese Angaben auf einen Mittelwert über alle Kammpolymere.

Die erfindungsgemäßen Kammpolymere können auf verschiedene Weise hergestellt werden . Ein bevorzugtes Verfahren besteht in der an sich bekannten radikalischen Copolymerisation von niedermolekularen Monomeren und makromolekularen Monomeren.

So können diese Polymere insbesondere durch radikalische Polymerisation, sowie verwandte Verfahren der kontrollierten radikalischen Polymerisation, wie beispielsweise ATRP (=Atom Transfer Radical Polymerisation) oder RAFT (=Reversible Addition Fragmentation Chain Transfer) erfolgen.

Die übliche freie radikalische Polymerisation ist u.a. in Ullmanns's Encyclopedia of Industrial Chemistry, Sixth Edition dargelegt. Im Allgemeinen werden hierzu ein Polymerisationsinitiator sowie ein Kettenüberträger eingesetzt.

Zu den verwendbaren Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, tert-Butylperoctoat, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können. Als Kettenüberträger eignen sich insbesondere öllösliche Mercaptane wie beispielsweise n-Dodecylmercaptan oder 2-Mercaptoethanol oder auch Kettenüberträger aus der Klasse der Terpene, wie beispielsweise Terpinolen.

Das ATRP-Verfahren ist an sich bekannt. Es wird angenommen, dass es sich hierbei um eine "lebende" radikalische Polymerisation handelt, ohne dass durch die Beschreibung des Mechanismus eine Beschränkung erfolgen soll. In diesen Verfahren wird eine Übergangsmetallverbindung mit einer Verbindung umgesetzt, welche eine übertragbare Atomgruppe aufweist. Hierbei wird die übertragbare Atomgruppe auf die Übergangsmetallverbindung transferiert, wodurch das Metall oxidiert wird. Bei dieser Reaktion bildet sich ein Radikal, das an ethylenische Gruppen addiert. Die Übertragung der Atomgruppe auf die Übergangsmetallverbindung ist jedoch reversibel, so dass die Atomgruppe auf die wachsende Polymerkette rücküberträgen wird, wodurch ein kontrolliertes Polymerisationssystem gebildet wird. Dementsprechend kann der Aufbau des Polymeren, das Molekulargewicht und die Molekulargewichtsverteilung gesteuert werden.

Diese Reaktionsführung wird beispielsweise von J-S. Wang, et al., J.Am.Chem.Soc., vol.117, p.5614-5615 (1995), von Matyjaszewski, Macromolecules, vol.28, p.7901 - 7910 (1995) beschrieben. Darüber hinaus offenbaren die Patentanmeldungen WO 96/30421, WO 97/47661, WO 97/18247, WO 98/40415 und WO 99/10387 Varianten der zuvor erläuterten ATRP.

Des Weiteren können die erfindungsgemäßen Polymere beispielsweise auch über RAFT Methoden erhalten werden. Dieses Verfahren ist beispielsweise in WO 98/01478 und WO 2004/083169 ausführlich dargestellt, worauf für Zwecke der Offenbarung ausdrücklich Bezug genommen wird.

Die Polymerisation kann bei Normaldruck, Unter- od. Überdruck durchgeführt werden. Auch die Polymerisationstemperatur ist unkritisch. Im allgemeinen liegt sie jedoch im Bereich von -20° - 200°C, vorzugsweise 50° - 150°C und besonders bevorzugt 80° - 130°C.

Die Polymerisation kann mit oder ohne Lösungsmittel durchgeführt werden. Der Begriff des Lösungsmittel ist hierbei weit zu verstehen. Die Auswahl des Lösungsmittels erfolgt nach der Polarität der eingesetzten Monomeren, wobei bevorzugt 100N-Öl, leichteres Gasöl und/oder aromatische Kohlenwasserstoffe, beispielsweise Toluol oder Xylol eingesetzt werden können.

Die zur Herstellung der erfindungsgemäßen Kammpolymeren in einer radikalischen Copolymerisation einzusetzenden niedermolekularen Monomeren sind im Allgemeinen kommerziell erhältlich.

Erfindungsgemäß verwendbare Makromonomere weisen genau eine Doppelbindung auf, die vorzugsweise endständig ist.

Hierbei kann die Doppelbindung durch die Herstellung der Makromonomeren bedingt vorhanden sein. So entsteht beispielsweise bei einer kationischen Polymerisation von Isobutylen ein Polyisobutylen (PIB), welches eine endständige Doppelbindung aufweist.

Des Weiteren können funktionalisierte polyolefinische Gruppen durch geeignete Umsetzungen in ein Makromonomer umgewandelt werden.

Beispielsweise können auf Polyolefinen basierende Makroalkohole und/oder Makroamine mit niedermolekularen Monomeren, die mindestens eine ungesättigte Estergruppe umfassen, wie beispielsweise Methyl(meth)acrylat oder Ethyl(meth)acrylat einer Umesterung oder Aminolyse unterworfen werden.

Diese Umesterung ist weithin bekannt. Beispielsweise kann hierfür ein heterogenes Katalysatorsystem, wie Lithiumhydroxid/Calciumoxid-Mischung (LiOH/CaO), reines Lithiumhydroxid (LiOH), Lithiummethanolat (LiOMe) oder Natriummethanolat.(NaOMe) oder ein homogenes Katalysatorsystem wie das Isopropyltitanat (Ti(OiPr)$_4$) oder das Dioctylzinnoxid (Sn(Oct)$_2$O) eingesetzt werden. Die Umsetzung stellt eine Gleichgewichtsreaktion dar. Daher wird üblicherweise der freigesetzte niedermolekulare Alkohol beispielsweise durch Destillation entfernt.

Des Weiteren können diese Makromonomere durch eine direkte Veresterung oder direkte Amidierung ausgehend beispielsweise von Methacrylsäure oder Methacrylsäureanhydrid, bevorzugt unter saurer Katalyse durch p-Toluolsulfonsäure oder Methansulfonsäure oder aus der freien Methacrylsäure durch die DCC-Methode (Dicyclohexylcarbodiimid) erhalten werden.

Darüber hinaus kann der vorliegende Alkohol oder das Amid durch Umsatz mit einem Säurechlorid wie dem (Meth)acrylsäurechlorid in ein Makromonomeres überführt werden.

Weiterhin besteht auch die Möglichkeit, einen Makroalkohol über die Reaktion der endständigen PIB-Doppelbindung, wie sie bei kationisch polymerisierte PIB entsteht, mit Maleinsäureanhydrid (EN-Reaktion) und nachfolgenden Umsatz mit einem $\alpha,\omega$-Aminoalkohol herzustellen.

Weiterhin können geeignete Makromonomere durch Umsetzung einer endständigen PIB-Doppelbindung mit Methacrylsäure oder durch eine Friedel-Crafts-Alkylierung der PIB-Doppelbindung an Styrol erhalten werden.

Bevorzugt werden bei den zuvor dargelegten Herstellungen der Makromonomere Polymerisationsinhibitoren wie z.B. das 4-Hydroxy-2,2,6,6-tetramethylpiperidinooxyl-Radikal und/oder Hydrochinonmonomethylether eingesetzt.

Die für die zuvor dargelegten Reaktionen zu verwendenden auf Polyolefinen basierenden Makroalkohole und/oder Makroamine können auf bekannte Weise hergestellt werden.

Des Weiteren sind diese Makroalkohole und/oder Makroamine zum Teil kommerziell erhältlich.

Zu den kommerziell erhältlichen Makroaminen zählt beispielsweise Kerocom® PIBA 03. Kerocom® PIBA 03 ist ein zu etwa 75wt% NH$_2$-funktionalisiertes Polyisobutylen (PIB) von M$_n$=1000g/mol, welches als Konzentrat von etwa 65wt% in aliphatischen Kohlenwasserstoffen von der BASF AG (Ludwigshafen, Deutschland) geliefert wird.

Ein weiteres Produkt ist das Kraton Liquid® L-1203, ein zu etwa 98wt% OH-funktionalisiertes hydriertes Polybutadien (auch Olefincopolymer OCP genannt) mit etwa je 50% 1,2-Wiederholungseinheiten und 1,4-Wiederholungseinheiten von M$_n$=4200g/mol, der Kraton Polymers GmbH (Eschborn, Deutschland).

Weiterer Anbieter geeigneter Makroalkohole auf Basis von hydriertem Polybutadien ist Cray Valley (Paris) als Tochter der Total (Paris) bzw. der Sartomer Company (Exton/PA/USA).

Die Herstellung von Makroaminen ist beispielsweise in EP 0 244 616 der BASF AG dargelegt. Die Darstellung der Makroamine erfolgt dabei über Oxierung und Aminierung bevorzugt von Polyisobutylen. Polyisobutylen bietet den Vorteil, bei tiefen Temperaturen keine Kristallisation zu zeigen.

Vorteilhafte Makroalkohole können des Weiteren nach den bekannten Patenten der BASF AG entweder über Hydroborierung (WO 2004/067583) von hochreaktivem Polyisobutylen HR-PIB (EP 0 628 575), welches einen erhöhten Anteil an endständigen $\alpha$-Doppelbindungen enthält, oder durch Oxierung gefolgt von Hydrierung (EP 0 277 345) dargestellt werden. Die Hydroborierung liefert im Vergleich zur Oxierung und Hydrierung höhere Alkoholfunktionalitäten.

Bevorzugte Makroalkohole auf Basis von hydrierten Polybutadienen können gemäß GB 2270317 der Shell Internationale Research Maatschappij erhalten werden. Ein hoher Anteil an 1,2-Wiederholungseinheiten von etwa 60% und mehr kann zu deutlich tieferen Kristallisationstemperaturen führen.

Die zuvor dargelegten Makromonomere sind zum Teil auch kommerziell erhältlich, wie zum Beispiel das aus dem Kraton Liquid® L-1203 hergestellte Kraton Liquid® L-1253, ein zu etwa 96wt% Methacrylat-funktionalisiertes hydriertes Polybutadien mit etwa je 50% 1,2-Wiederholungseinheiten und 1,4-Wiederholungseinheiten, der Kraton Polymers GmbH (Eschborn, Deutschland).

Die Synthese des Kraton® L-1253 erfolgte nach GB 2270317 der Shell Internationale Research Maatschappij.

Auf Polyolefinen basierende Makromonomere und deren Herstellung sind auch in EP 0 621 293 und EP 0 699 694 dargelegt.

Neben einer zuvor dargelegten radikalischen Copolymerisation von Makromonomeren und niedermolekularen Monomeren können die erfindungsgemäßen Kammpolymere durch polymeranaloge Umsetzungen erhalten werden.

Hierbei wird zunächst auf bekannte Weise ein Polymer aus niedermolekularen Monomeren hergestellt, welches anschließend umgesetzt wird. Hierbei kann das Rückgrat eines Kammpolymeren aus einem reaktiven Monomeren wie Maleinsäureanhydrid, Methacrylsäure oder aber Glycidylmethacrylat und anderen inreaktiven kurzkettigen Rückgrat-

EP 1 899 393 B1

monomeren synthetisiert werden. Hierbei können die zuvor dargelegten Initiatorsysteme wie t-Butylperbenzoat oder t-Butyl-per-2-ethylhexanoat und Regler wie n-Dodecylmercaptan Verwendung finden.

In einem weiteren Schritt können, beispielsweise in einer Alkoholyse oder Aminolyse, die Seitenketten, welche auch als Arme bezeichnet werden, generiert werden. Hierbei können die zuvor dargelegten Makroalkohole und/oder Makroamine eingesetzt werden.

Die Umsetzung des zunächst gebildeten Rückgratpolymeren mit Makroalkoholen und/oder Makroaminen entspricht im Wesentlichen den zuvor dargelegten Umsetzungen der Makroalkohole und/oder Makroamine mit niedermolekularen Verbindungen.

So können die Makroalkohole und/oder Makroamine auf an sich bekannte Pfropfreaktionen beispielsweise an die vorliegenden Maleinsäureanhydrid- oder Methacrylsäure-Funktionalitäten im Rückgratpolymeren unter Katalyse z.B. durch p-Toluolsulfonsäure oder Methansulfonsäure zu Estern, Amiden oder Imiden zu den erfindungsgemäßen Kammpolymere umgesetzt werden. Durch Zugabe von niedermolekularen Alkoholen und/oder Aminen wie n-Butanol oder N-(3-Aminopropyl)-morpholin wird diese polymeranloge Reaktion insbesondere bei Maleinsäureanhydrid-Rückgraten zu vollständigen Umsätzen geführt.

Bei Glycidylfunktionalitäten im Rückgrat kann eine Addition des Makroalkohols und/oder des Makroamins durchgeführt werden, so dass Kammpolymere entstehen.

Des Weiteren können die Makroalkohole und/oder die Makroamine durch eine polymeranaloge Alkoholyse oder Aminolyse mit einem Rückgrat, das kurzkettige Esterfunktionalitäten enthält, umgesetzt werden, um Kammpolymere zu generieren.

Die Verfahren zur Herstellung der Kammpolymere können diskontinuierlich und/oder frei von Reglern durchgeführt werden.

Neben der Umsetzung des Rückgratpolymeren mit makromolekularen Verbindungen können geeignet funktionalisierte Polymere, die durch Umsetzung von niedermolekularen Monomeren erhalten wurden, mit weiteren niedermolekularen Monomeren unter Bildung von Kammpolymeren umgesetzt werden. Hierbei weist das zunächst hergestellte Rückgratpolymere mehrere Funktionalitäten auf, die als Initiatoren von multiplen Pfropfpolymerisationen dienen.

So kann eine multiple kationische Polymerisation von i-Buten initiiert werden, die zu Kammpolymeren mit Polyolefin-Seitenarmen führt. Geeignet sind für derartige Pfroftcopolymerisationen auch die zuvor dargelegten ATRP- und/oder RAFT-Verfahren, um Kammpolymere mit einer definierter Architektur zu erhalten.

Das Kammpolymer der vorliegenden Erfindung weist gemäß einem besonderen Aspekt der vorliegenden Erfindung einen geringen Anteil an olefinischen Doppelbindungen auf. Vorzugsweise ist die Jodzahl kleiner oder gleich 0.2 g pro g Kammpolymer, besonders bevorzugt kleiner oder gleich 0.1 g pro g Kammpolymer. Dieser Anteil kann gemäß DIN 53241 nach 24stündigem Abziehen von Trägeröl und niedermolekularen Restmonomeren bei 180°C im Vakuum bestimmt werden.

Gemäß einem besonderen Aspekt der vorliegenden Erfindung weist das Kammpolymer vorzugsweise Wiederholungseinheiten, die von Styrol abgeleitet sind, und Wiederholungseinheiten auf, die von n-Butylmethacrylat abgeleitet sind. Vorzugsweise liegt das Gewichtsverhältnis von Styrol-Wiederholungseinheiten und n-Butylmethacrylat-Wiederholungseinheiten im Bereich von 90:10 bis 10:90, besonders bevorzugt 80:20 bis 20:80.

Gemäß einer weiteren bevorzugten Ausführungsform der vorliegenden Erfindung weist das Kammpolymer vorzugsweise Wiederholungseinheiten, die von Styrol abgeleitet sind, und Wiederholungseinheiten auf, die von n-Butylacrylat abgeleitet sind. Vorzugsweise liegt das Gewichtsverhältnis von Styrol-Wiederholungseinheiten und n-Butylacrylat-Wiederholungseinheiten im Bereich von 90:10 bis 10:90, besonders bevorzugt 80:20 bis 20:80.

Nach einem weiteren bevorzugten Gesichtspunkt der vorliegenden Erfindung weist das Kammpolymer vorzugsweise Wiederholungseinheiten, die von Methylmethacrylat abgeleitet sind, und Wiederholungseinheiten auf, die von n-Butylmethacrylat abgeleitet sind. Vorzugsweise liegt das Gewichtsverhältnis von Methylmethacrylat-Wiederholungseinheiten und n-Butylmethacrylat-Wiederholungseinheiten im Bereich von 50:50 bis 0:100, besonders bevorzugt 30:70 bis 0:100.

Vorzugsweise kann das erfindungsgemäße Kammpolymer in einer Schmierölzusammensetzung eingesetzt werden. Eine Schmierölzusammensetzung umfasst mindestens ein Schmieröl.

Zu den Schmierölen gehören insbesondere Mineralöle, synthetische Öle und natürliche Öle.

Mineralöle sind an sich bekannt und kommerziell erhältlich. Sie werden im Allgemeinen aus Erdöl oder Rohöl durch Destillation und/oder Raffination und gegebenenfalls weitere Reinigungs- und Veredelungsverfahren gewonnen, wobei unter den Begriff Mineralöl insbesondere die höhersiedenden Anteile des Rohoder Erdöls fallen. Im Allgemeinen liegt der Siedepunkt von Mineralöl höher als 200 °C, vorzugsweise höher als 300 °C, bei 5000 Pa. Die Herstellung durch Schwelen von Schieferöl, Verkoken von Steinkohle, Destillation unter Luftabschluss von Braunkohle sowie Hydrieren von Stein- oder Braunkohle ist ebenfalls möglich. Zu einem geringen Anteil werden Mineralöle auch aus Rohstoffen pflanzlichen (z. B. aus Jojoba, Raps) od. tierischen (z. B. Klauenöl) Ursprungs hergestellt. Dementsprechend weisen Mineralöle, je nach Herkunft unterschiedliche Anteile an aromatischen, cyclischen, verzweigten und linearen Kohlenwasserstoffen auf.

9

Im Allgemeinen unterscheidet man paraffinbasische, naphthenische und aromatische Anteile in Rohölen bzw. Mineralölen, wobei die Begriffe paraffinbasischer Anteil für längerkettig bzw. stark verzweigte iso-Alkane und naphtenischer Anteil für Cycloalkane stehen. Darüber hinaus weisen Mineralöle, je nach Herkunft und Veredelung unterschiedliche Anteile an n-Alkanen, iso-Alkanen mit einem geringen Verzweigungsgrad, sogenannte monomethylverzweigten Paraffine, und Verbindungen mit Heteroatomen, insbesondere O, N und/oder S auf, denen bedingt polare Eigenschaften zugesprochen werden. Die Zuordnung ist jedoch schwierig, da einzelne Alkanmoleküle sowohl langkettig verzweigte Gruppen als auch Cycloalkanreste und aromatische Anteile aufweisen können. Für die Zwecke der vorliegenden Erfindung kann die Zuordnung beispielsweise gemäß DIN 51 378 erfolgen. Polare Anteile können auch gemäß ASTM D 2007 bestimmt werden.

Der Anteil der n-Alkane beträgt in bevorzugten Mineralölen weniger als 3 Gew.-%, der Anteil der O, N und/oder S-haltigen Verbindungen weniger als 6 Gew.-%. Der Anteil der Aromaten und der monomethylverzweigten Paraffine liegt im Allgemeinen jeweils im Bereich von 0 bis 40 Gew.-%. Gemäß einem interssanten Aspekt umfaßt Mineralöl hauptsächlich naphtenische und paraffinbasische Alkane, die im allgemeinen mehr als 13, bevorzugt mehr als 18 und ganz besonders bevorzugt mehr als 20 Kohlenstoffatome aufweisen. Der Anteil dieser Verbindungen ist im allgemeinen $\geq$ 60 Gew.-%, vorzugsweise $\geq$ 80 Gew.-%, ohne dass hierdurch eine Beschränkung erfolgen soll. Ein bevorzugtes Mineralöl enthält 0,5 bis 30 Gew.-% aromatische Anteile, 15 bis 40 Gew.-% naphthenische Anteile, 35 bis 80 Gew.-% paraffinbasische Anteile, bis zu 3 Gew.-% n-Alkane und 0,05 bis 5 Gew.-% polare Verbindungen, jeweils bezogen auf das Gesamtgewicht des Mineralöls.

Eine Analyse von besonders bevorzugten Mineralölen, die mittels herkömmlicher Verfahren, wie Harnstofftrennung und Flüssigkeitschromatographie an Kieselgel, erfolgte, zeigt beispielsweise folgende Bestandteile, wobei sich die Prozentangaben auf das Gesamtgewicht des jeweils eingesetzten Mineralöls beziehen:

n-Alkane mit ca. 18 bis 31C-Atome:

0,7 - 1,0 %,

gering verzweigte Alkane mit 18 bis 31 C-Atome:

1,0 - 8,0 %,

Aromaten mit 14 bis 32 C-Atomen:

0,4 - 10,7 %,

Iso- und Cyclo-Alkane mit 20 bis 32 C-Atomen:

60,7 - 82,4 %,

polare Verbindungen:

0,1 - 0,8 %,

Verlust:

6,9 - 19,4 %.

Wertvolle Hinweise hinsichtlich der Analyse von Mineralölen sowie eine Aufzählung von Mineralölen, die eine abweichende Zusammensetzung aufweisen, findet sich beispielsweise in Ullmanns Encyclopedia of Industrial Chemistry, 5th Edition on CD-ROM, 1997, Stichwort "lubricants and related products".

Synthetische Öle umfassen unter anderem organische Ester, beispielsweise Diester und Polyester, Polyalkylenglykole, Polyether, synthetische Kohlenwasserstoffe, insbesondere Polyolefme, von denen Polyalphaolefine (PAO) bevorzugt sind, Silikonöle und Perfluoralkylether. Sie sind meist etwas teurer als die mineralischen Öle, haben aber Vorteile hinsichtlich ihrer Leistungsfähigkeit.

Natürliche Öle sind tierische oder pflanzliche Öle, wie beispielsweise Klauenöle oder Jojobaöle.

Diese Schmieröle können auch als Mischungen eingesetzt werden und sind vielfach kommerziell erhältlich.

Die Konzentration des Kammpolymeren in der Schmierölzusammensetzung liegt vorzugsweise im Bereich von 0,1 bis 40 Gew.-%, besonders bevorzugt im Bereich von 1 bis 20 Gew.-%, bezogen auf das Gesamtgewicht der Zusammensetzung.

Neben den zuvor genannten Komponenten kann eine Schmierölzusammensetzung weitere Additive und Zusatzstoffe enthalten.

Zu diesen Additiven gehören unter anderem Antioxidantien, Korrosionsinhibitoren, Antischaummittel, Anti-Wear-Komponenten, Farbstoffe, Farbstabilisatoren, Detergentien, Stockpunktniedriger und/oder DI-Additive.

Des Weiteren umfassen diese Additive Viskositätsindexverbesserer, Stockpunktverbesserer, Dispergierhilfsmittel und/oder Reibveränderer (friction modifier), die besonders bevorzugt auf einem linearen Polyalkyl(meth)acrylat mit 1 bis 30 Kohlenstoffatomen in der Alkoholgruppe basieren können. Diese linearen Polyalkyl(meth)acrylate sind insbesondere im einleitend diskutierten Stand der Technik beschrieben, wobei diese Polymere dispergierende Monomere aufweisen können.

Bevorzugte Schmierölzusammensetzungen weisen eine gemäß ASTM D 445 bei 40°C gemessenen Viskosität im Bereich von 10 bis 120 mm$^2$/s, besonders bevorzugt im Bereich von 22 bis 100 mm$^2$/s auf.

Gemäß einem besonderen Aspekt der vorliegenden Erfindung weisen bevorzugte Schmierölzusammensetzung einen gemäß ASTM D 2270 bestimmten Viskositätsindex im Bereich von 100 bis 400, besonders bevorzugt im Bereich 150 bis 350 und ganz besonders bevorzugt im Bereich von 200 bis 300 und/oder einen PSSI nach ASTM D2603 Ref. B kleiner oder gleich 45 auf.

Nachfolgend wird die Erfindung anhand von Beispielen näher erläutert, ohne dass hierdurch eine Beschränkung erfolgen soll.

A) Herstellung von Makromonomeren

Es wurden verschiedene Makromonomere hergestellt oder kommerziell erhalten. In Tabelle 1 ist eine Zusammenfassung der Eigenschaften der zur Herstellung von Makromonomeren eingesetzten Makroalkohole und/oder Makroamine dargelegt.

Das Makroamin 1 ist das auf Polyisobutylen basierende Makroamin in Kerocom® PIBA 03, welches von der BASF AG kommerziell erhalten wurde.

Der Makroalkohol 2 ist ein auf Polyisobutylen basierender Makroalkohol, welcher gemäß EP 0 277 345 erhalten wurde.

Die Makroalkohole 3 und 4 sind auf Polyisobutylen basierende Makroalkohole, welche gemäß WO 2004/067583 erhalten wurden.

Der Makroalkohol 5 stellt einen auf hydriertem Polybutadien basierenden Makroalkohol dar, welcher gemäß GB 2270317 erhalten wurde.

$M_n$ stellt das zahlengemittelte Molekulargewicht dar, welches durch GPC gegen Polyolefinstandards derselben Chemie oder durch osmotische Methoden wie der Dampftdruck oder Membranosmose bestimmt werden kann. Die kinematische Viskosität wird durch v beschrieben und die dynamische durch η (ASTM D445). Der Anteil an 1,2-Wiederholungseinheiten (Vinyl-Wiederholungseinheiten) über die Summe aus 1,2-Wiederholungseinheiten und 1,4-Wiederholunsgeinheiten, wie er für (hydriertes) Polybutadien durch H-NMR-Spektroskopie bestimmbar ist, ist mit $f_{vinyl}$ gegeben. Die mit $f_{vinyl}$ korrelierende Schmelztemperatur durch DSC ist mit $T_m$ gegeben.

Tabelle 1

| | $M_n$ [g/mol] | $V_{40°C}$ [mm$^2$/s] | $V_{100°C}$ [mm$^2$/S] | $\eta_{25°C}$ [mPas] | $\eta_{50°C}$ [mPas] | $\eta_{75°C}$ [mPas] | $f_{vinyl}$ [%] | $T_m$ [%] |
|---|---|---|---|---|---|---|---|---|
| Makroamin 1 | 1000 | 4650 | 190 | | | | n.a. | n.a. |
| Makroalkohol 2 | 2300 | 48000 | 1500 | | | n.a. | n.a. | n.a. |
| Makroalkohol 3 | 2300 | 48000 | 1500 | | | | n.a. | n.a. |
| Makroalkohol 4 | 4800 | | | | | | n.a. | n.a. |
| Makroalkohol 5 | 4300 | | | 56000 | | | 58 | -29 |
| Kraton® L-1203 | 4200 | | | 35000 | 4800 | 1300 | 50 | -17 |
| Die Abkürzung "n.a." bedeutet, dass keine Schmelztemperatur gemessen werden konnte. | | | | | | | | |

Das von Makroamin abgeleitete Makromonomer wird durch Aminolyse von MMA hergestellt. Hierfür werden 1850g Kerocom® PIBA 03 (enthält 35% aliphatische Kohlenwasserstoffe) in 1200g MMA unter Rühren bei 60°C aufgelöst. Zur Lösung werden 0.6g Hydrochinonmonomethylether und 0.12g 4-Hydroxy-2,2,6,6-tetramethylpiperidino-oxyl-Radikal gegeben. Nach Erwärmen zum MMA-Rückfluss (etwa 100°C) unter stabilisierender Luftdurchleitung werden zur azeotropen Trocknung etwa 30g MMA abdestilliert. Nach Abkühlen werden 24g $Sn(Oct)_2O$ zugesetzt und zum MMA-Rückfluss erwärmt. Bei dieser Temperatur lässt man drei Stunden reagieren. Nach Abkühlen werden 1000g Wasser zur Katalysatorfällung zugegeben und 4h gerührt. Das Zweiphasengemisch wird im Scheidetrichter aufgetrennt und die untere Wasserphase verworfen. Die obere organische Phase wird mit 10g Kieselgur (Celatom® FW-80) gerührt und über einen Druckfilter (Seitz K800) filtriert. Überschüssiges MMA und aliphatische Kohlenwasserstoffe werden am Vakuumrotationsverdampfer abgezogen und das Produkt entgast. Man erhält 1300g Makromonomer.

Die von Makroalkoholen abgeleiteten Makromonomeren werden durch Umesterung von MMA hergestellt. Hierfür werden jeweils etwa 350g Makroalkohol in 350g MMA unter 12stündigem Rühren bei 60°C aufgelöst. Zur Lösung werden 200mg Hydrochinonmonomethylether und 20mg 4-Hydroxy-2,2,6,6-tetramethylpiperidino-oxyl-Radikal gegeben. Nach Erwärmen zum MMA-Rückfluss (etwa 100°C) unter stabilisierender Luftdurchleitung werden zur azeotropen Trocknung etwa 30g MMA abdestilliert. Nach Abkühlen werden 2.7g LiOMe zugesetzt und zum Rückfluss des Methanol/MMA-Azeotrops (etwa 64°C) erwärmt. Das Methanol/MMA-Azeotrop wird ständig abdestilliert, bis sich eine konstante Kopftemperatur von etwa 100°C einstellt. Bei dieser Temperatur lässt man noch eine weitere Stunde nachreagieren. Nach Abkühlen werden unlösliche Katalysator-Rückstände im Heißen durch Druckfiltration abgetrennt (Seitz T1000 Tiefenfilter). Das Produkt wird schließlich am Vakuumrotationsverdampfer entgast. Man erhält 350g Makromonomer.

Bei Makroalkoholen höherer Molekulargewichte kann die Zugabe von KPE 100N-Öl zu Beginn der Makromonomersynthese hilfreich sein. Der in die weiter unten beschriebenen Kammpolymersynthesen eingeschleppte Gehalt an KPE 100N-Ö1 ist entsprechend zu berücksichtigen.

Kraton Liquid® L-1253 ist ein Methacrylat-funktionalisiertes hydriertes Polybutadien, das aus dem OH-funktio-nalisierten hydrierten Polybutadien Kraton Liquid® L-1203 hergestellt wird, und von der Kraton Polymers GmbH (Eschborn, Deutschland) kommerziell erhalten wurde.

Die Makromonomer-Funktionalität $f_{MM}$ eines jeden Makromonomeren wurde aus den GPC-Kurven der Kammpolymere selbst abgeleitet. Die GPC-Methode zur Bestimmung des massengemittelten Molekulargewichts $M_w$ sowie des Polydispersitätsindex PDI der Kammpolymeren wird im Folgenden beschrieben. Die Messungen erfolgten in Tetrahydrofuran bei 35°C gegen eine Polymethylmethacrylat-Eichkurve aus einem Satz von ≥25 Standards (Polymer Standards Service bzw. Polymer Laboratorien), deren $M_{peak}$ logarhythmisch gleichmäßig über den Bereich von $5 \cdot 10^6$ bis $2 \cdot 10^2$ g/mol verteilt lag. Es wurde eine Kombination aus sechs Säulen (Polymer Standards Service SDV 100A / 2x SDV LXL / 2x SDV 100A / Shodex KF-800D) venwendet. Zur Signalaufnahme wurde ein RI-Detektor (Agilent 1100 Series) eingesetzt. Die Makromonomer-Funktionalität $f_{MM}$ wurde nun durch einfache Kalkulation aus dem Verhältnis f zwischen verbleibender integraler Fläche unter der GPC-Spur des Makromonomeren zu dem Gesamtintegral unter Makromonomerem und eigentlichem Kammpolymerem als $f_{MM}=1-f/W_{MM}$ bestimmt. Dabei gibt $W_{MM}$ die eingewogene Gewichtsfraktion an Makromonomeren bezogen auf alle Monomere an. Die ermittelten Werte für die Makromonomer-Funktionalität $f_{MM}$ sind in Tab. 2 zusammengefasst. Hierbei wurden gleiche Responsefaktoren für alle Wiederholeinheiten angenommen. Die Polymerisationen der Kammpolymersynthesen wurden bis zu vollständigem Umsatz an niedermolekularem Rückgrat-Monomeren (nBMA, Sty, nBA, MMA bzw. DiBF) mit Umsätzen >99% (HPLC) durchgeführt.

Die Eigenschaften der erhaltenen Verbindungen sind in Tabelle 2 dargestellt.

Tabelle 2

| Erhaltene Verbindung | Eingesetzte Verbindung | $f_{MM}$ [%] |
|---|---|---|
| Makromonomer 1 | Makroamin 1 | 75 |
| Makromonomer 2 | Malcroalkohol 2 | 59 |
| Makromonomer 3 | Makroalkohole 3 | 77 |
| Makromonomer 4 | Makroalkohol 4 | 54 |
| Makromonomer 5 | Makroalkohol 5 | 83 |
| Kraton® L-1253 | Kraton® L-1203 | 96 |

B) Synthesen der Kammpolymere

Beispiele 1 bis 7 und Vergleichsbeispiele 1 bis 4

In einer Apparatur mit 4-Halskolben und KPG-Säbelrührer wird ein 150g-Gemisch aus niedermolekularen Monomeren und Makromonomer, dessen Zusammensetzung in Tabelle 3 dargelegt ist, sowie 65g Shell Risella 907 Öl und 35g KPE 100N-Öl vorgelegt. Nach Erwärmen unter Stickstoff auf 120°C werden 0.9g t-Butylperbenzoat zugesetzt und die Temperatur gehalten. 3h und 6h nach der ersten Initiatorzugabe werden jeweils nochmals 0.3g t-Butylperbenzoat nachgefüttert und über Nacht bei 120°C gerührt. Am darauf folgenden Tag wird mit 125g KPE 100 Öl verdünnt. Man erhält 375g einer 40%igen Lösung an Kammpolymeren in Mineralöl.

Beispiele 8 bis 11

In einer Apparatur mit 4-Halskolben und KPG-Säbelrührer wird ein 150g-Gemisch aus niedermolekularen Monomeren und Makromonomer, dessen zusammensetzung in Tabelle 3 dargelegt ist, sowie 65g Shell Risella 907 Öl uns 35g KPE 100N-Öl vorgelegt. Nach Erwärmen unter Stickstoff auf 90°C werden 0.3g t-Butyl-per-2-ethylhexanoat zugesetzt und die Temperatur gehalten. 3h und 6h nach der ersten Initiatorzugabe werden jeweils nochmals 0.3g t-Butyl-per-2-ethyl-hexanoat nachgefüttert und über Nacht bei 90°C gerührt. Am darauf folgenden Tag wird mit 125g KPE 100 Öl verdünnt. Man erhält 375g einer 40%igen Lösung an Kammpolymeren in Mineralöl.

Beispiele 12 und 13

In einer Apparatur mit 4-Halskolben und KPG-Säbelrührer wird ein 150g-Gemisch aus niedermolekularen Monomeren und Makromonomer, dessen Zusammensetzung in Tabelle 3 dargelegt ist, sowie 100g Toluol vorgelegt. Nach Erwärmen unter Stickstoff auf 90°C werden 0.3g t-Butyl-per-2-ethylhexanoat zugesetzt und die Temperatur gehalten. 2h, 4h, 6h und 8h nach der ersten Initiatorzugabe werden jeweils nochmals 0.3g t-Butylper-2-ethylhexanoat nachgefüttert und über Nacht bei 90°C gerührt. Am darauffolgenden Tag wird mit 225g KPE 100N-Ö1 verdünnt und das Toluol durch Entgasung am VakuumRotationsverdampfer entfernt. Man erhält 375g einer 40%igen Lösung an Kammpolymeren in Mineralöl.

Unter Berücksichtigung der die 150g bildenden Brutto-Zusammensetzung aus Makromonomer und niedermolekularen Monomeren sowie der Makromonomer-Funktionalität $f_{MM}$ wurde für jedes Kammpolymeres die massenanteilige Netto-Zusammensetzung sowie im weiteren unter Berücksichtigung der Monomermolmassen der molare Verzweigungsgrad $f_{branch}$ bestimmt. Die erhaltenen Werte sind in Tabelle 3 dargelegt. Weiterhin sind die Molekulargewichte und PDIs durch GPC im für alle Segmente der Kammpolymeren guten Lösungsmittel Tetrahydrofuran gemäß oben beschriebener Methode angegeben.

Weiterhin wurde nach 24stündigem Abziehen von Trägeröl und niedermolekularen Restmonomeren bei 180°C im Vakuum, das Kammpolymere durch DSC analysiert. Dazu wurde eine Probemenge von 10mg in der gelochten DSC-Pfanne im Bereich von -80°C bis +130°C bei 10K/min vermessen (Pyris 1, Perkin-Elmer). Aus der jeweils zweiten Heizkurve wurde die Glasstufe $T_G$ der Rückgrates bestimmt (Tabelle 3).

Tabelle 3

| | Monomerengemisch Brutto-Zusammensetzung [wt%] | | | Netto-Polymer-zusammen-setzung [wt%] | | |
|---|---|---|---|---|---|---|
| Beispiel 1 | Kraton® L-1253 45,0 | Sty 40,0 | nBMA 15,0 | 44 | 41 | 15 |
| Beispiel 2 | Makromonomer 2 43,1 | Sty 42,6 | nBMA 14,3 | 31 | 52 | 17 |
| Beispiel 3 | Makromonomer 3 37,2 | Sty 40,6 | nBMA 22,0 | 31 | 44 | 24 |
| Beispiel 4 | Kraton® L-1253 45,0 | Sty 35,6 | nBMA 19,4 | 44 | 36 | 20 |
| Beispiel 5 | Makromonomer 4 53,3 | Sty 30,4 | nBMA 16,3 | 38 | 40 | 22 |
| Beispiel 6 | Makromonomer 5 40,0 | Sty 12,0 | nBMA 48,0 | 36 | 13 | 52 |
| Beispiel 7 | Makromonomer 2 44,0 | Sty 36,0 | DiBF 20,0 | 32 | 44 | 24 |
| Vergleichs-beispiel 1 | Makromonomer 2 82,2 | Sty 11,6 | nBMA 6,2 | 73 | 17 | 9 |
| Vergleichs-beispiel 2 | Makromonomer 2 2,5 | Sty 63,0 | nBMA 34,5 | 1 | 64 | 35 |
| Vergleichs-beispiel 3 | Makromonomer 2 40,0 | Sty 20,0 | C12-15MA 40,0 | 28 | 24 | 48 |
| Vergleichs-beispiel 4 | Makromonomer 2 20,0 | Sty 40,0 | C12-15MA 40,0 | 13 | 44 | 44 |
| Beispiel 8 | Makromonomer 2 49,4 | nBMA 40,5 | MMA 10,1 | 37 | 51 | 13 |
| Beispiel 9 | Kraton® L-1253 45,0 | nBMA 49,5 | MMA 5,5 | 44 | 50 | 6 |
| Beispiel 10 | Makromonomer 1 48,1 | nBMA 51,9 | | 41 | 59 | |
| Beispiel 11 | Makromonomer 2 39,0 | nBMA 61,0 | | 27 | 73 | |
| Beispiel 12 | Kraton® L-1253 45,0 | Sty 42,1 | nBA 12,9 | 44 | 43 | 13 |
| Beispiel 13 | Makromonomer 2 48,1 | Sty 39,6 | nBA 12,3 | 35 | 49 | 15 |
| Vergleichs-beispiel 5 | | C12-15MA 100,0 | | | | |
| Vergleichs-beispiel 6 | | C12/14/16/18MA 75,0 | MMA 25,0 | | | |

In Tabelle 3 bedeuten:

Sty:                    Styrol

MMA:                    Methylmethacylat

nBMA:                   n-Butylmethacrylat

nBA:                    n-Butylacrylat

DiBF:                   Diisobutylfumarat

C12-15MA:               Alkylmethacrylat-Gemisch mit 12 bis 15

                        Kohlenstoffatomen in den Alkoholresten

C12/14/16/18MA:         Alkylmethacrylat-Gemisch mit 12, 14, 16 und 18

                        Kohlenstoffatomen in den Alkoholresten

Tabelle 3 (Fortsetzung)

| | $f_{branch}$ | $M_w$ [g/mol] | PDI | Rückgrat $T_G$ [°C] |
|---|---|---|---|---|
| Beispiel 1 | 2,0% | 281000 | 3,7 | +50 |
| Beispiel 2 | 2,0% | 132000 | 5,2 | +59 |
| Beispiel 3 | 2,1% | 144000 | 5,0 | |
| Beispiel 4 | 2,1% | 270000 | 5,5 | |
| Beispiel 5 | 1,4% | 142000 | 6,3 | |
| Beispiel 6 | 1,6% | 183000 | 3,9 | |
| Beispiel 7 | 2,4% | | | +54 |
| Vergleichs-beispiel 1 | 11,5% | 83500 | 6,9 | |
| Vergleichs-beispiel 2 | 0,07% | | | |
| Vergleichs-beispiel 3 | 2,8% | | | falls vorhanden <-60 |
| Vergleichs-beispiel 4 | 0,9% | | | falls vorhanden <-60 |
| Beispiel 8 | 3,1% | 187000 | 9,8 | +38 |
| Beispiel 9 | 2,4% | 402000 | 4,6 | |

| | $f_{branch}$ | $M_w$ [g/mol] | PDI | Rückgrat $T_G$ [°C] |
|---|---|---|---|---|
| Beispiel 10 | 8,2% | 353000 | 13,4 | |
| Beispiel 11 | 2,2% | 354000 | 16,6 | |
| Beispiel 12 | 2,0% | 181000 | 3,8 | +46 |
| Beispiel 13 | 2,4% | 79100 | 4,1 | |
| Vergleichs-beispiel 5 | n.a. | 24000 | 1.9 | |
| Vergleichs-beispiel 6 | n.a. | 43000 | 2.0 | |

Evaluierung der Kammpolymere

Die Charakterisierung der erhaltenen Kammpolymer-Additive erfolgt über VI-Messungen nach ASTM D2270 und über PSSI-Messungen nach ASTM D2603 Ref. B (12.5min Ultraschall) bzw. nach DIN 51381 (30 Zyklen Bosch-Pumpe) einer Lösung von eingestellter kinematischer Viskosität bei 100°C KV100=14.0mm$^2$/s (ASTM D445) in einem 150N Grundöl (KV40=31.68mm$^2$/s, KV100=5.42mm$^2$/s, VI=105).

Es zeigt sich deutlich, dass die erfindungsgemäßen Kammpolymere eine wesentlich bessere Relation von VI, PSSI und Feststoffgehalt aufweisen, als die im Stand der Technik gemäß EP 0699694 dargelegten Polymere. Die Ergebnisse der dargelegten Evaluierung sind in Tabelle 4 dargelegt.

Tabelle 4

| Polymer gemäß | Brutto-Polymergehalt [%] in 150N Messöl für KV100 = 14mm$^2$/s | VI bei KV100= 14mm$^2$/s | PSSI nach ASTM2603 Ref. B (12.5min Ultraschall) | PSSI nach DIN 51382 (30 Zyklen Boschpumpe) |
|---|---|---|---|---|
| Beispiel 1 | 5,05 | 249 | 23,4 | 2,1 |
| Beispiel 2 | 9,24 | 254 | 4 | |
| Beispiel 3 | 7,96 | 255 | 6,5 | 0,0 |
| Beispiel 4 | 5,83 | 245 | 15,1 | 1,6 |
| Beispiel 7 | 11,34 | 224 | | |
| Beispiel 9 | 4,4 | 263 | 29,4 | 3,8 |
| Beispiel 11 | 5,81 | 284 | | 4,7 |
| Vergleichs-beispiel 1 | 7,41 | 169 | 36,9 | |
| Vergleichs-beispiel 2 | unlöslich | | | |
| Vergleichs-beispiel 3 | 6,21 | 173 | | 11,3 |
| Vergleichs-beispiel 4 | 5,95 | 164 | | 18,2 |

Des Weiteren wurden Kammpolymere gemäß der vorliegenden Erfindung mit linearem äußerst scherstabilen PAMA verglichen (Vergleichsbeispiel 5). Dabei wurden die Feststoffgehalte der Polymere auf eine Lösungsviskosität von KV100=13.15mm$^2$/s in einem VII-freien D/I-pakethaltigen API Gruppe III Grundöl aus Polyalphaolefin und Hydrocracköl (KV100=5.15mm$^2$/s, KV40=25.30mm$^2$/s, VI=137, Stockpunkt -45°C nach ASTM D97) eingestellt. Auch hier zeigen sich deutliche Vorteile in Polymergehalt als auch im VI bei vergleichbarem oder gar besserem PSSI nach DIN 51350 Teil 6 (20h bzw. 192h Kegelrollenlager). Auch in der dynamischen Tieftemperaturviskosität bei -40°C nach DIN 5139S bzw. dem Stockpunkt nach ASTM D97 ergeben sich äußerst vorteilhafte Werte für die Kammpolymeren. Der Vergleich von Beispiel 6 gegen Beispiel 12 zeigt zusätzlich, dass Kammpolymere, die auf OCP-Makromonomeren von erhöhtem Anteil an 1,2-Wiederholungseinheiten basieren, in den Tieftemperatureigenschaften deutlich besser sind. Die erhaltenen Ergebnisse der zuvor dargelegten Untersuchungen sind in Tabelle 5 dargelegt.

Tabelle 5

| Polymer gemäß | Brutto-Polymergehalt [%] in D/I-pakethaltigem Gruppe III Grundöl für KV100=13.15mm$^2$/s | VI bei KV100= 12.15mm$^2$/s | PSSI nach DIN 51350 Teil 6 (20h Kegel-rollenlager) | PSSI nach DIN 51350 Teil 6 (192h Kegel-rollenlager) |
|---|---|---|---|---|
| Beispiel 2 | 11,2 | 266 | 12,2 | |
| Beispiel 5 | 10,2 | 259 | 20,2 | 46,1 |
| Beispiel 6 | 7,6 | 261 | | |
| Beispiel 8 | 10,0 | 242 | 24,8 | |
| Beispiel 12 | 7,9 | 239 | 16,1 | 43,5 |
| Beispiel 13 | 10,4 | 213 | 10,6 | |
| Vergleichs-beispiel 5 | 22,1 | 176 | 19,0 | 45,0 |

Tabelle 5 (Fortsetzung)

| Polymer gemäß | Dynamische Viskosität bei -40°C nach DIN 51398 im Flüssigkeitsbad [mPas] | Stockpunkt nach ASTM D97 [°C] |
|---|---|---|
| Beispiel 2 | 19600 | -45 |
| Beispiel 5 | 25900 | |
| Beispiel 6 | 34000 | -45 |
| Beispiel 8 | 29300 | -45 |
| Beispiel 12 | Solid | -27 |
| Beispiel 13 | 37500 | |

Weiterhin wurde ein Kammpolymeres als VII in einer ISO46/VI160 Hydraulikölformulierung auf Basis von API Gruppe I 100N/600N-Ölen eingesetzt und im PSSI gemäß DIN 51350 (Teil 6, 20h Kegelrollenlager) gegen ein lineares PAMA verglichen (Vergleichsbeispiel 6). Es zeigte sich, dass eine außerordentlich hohe Reduzierung des nötigen Feststoffgehaltes auf weniger als 33% bei gleichem bis leicht besserem PSSI möglich ist. Die Zusammensetzungen der Hydraulikölformulierungen und die erhaltenen Ergebnisse der Untersuchung sind in Tabelle 6 dargelegt.

Tabelle 6

| Polymer gemäß | Brutto-Polymer-gehalt [%] in ISO46/VI160-Formulierung | Oronite Oloa 4992 Anti-Abrieb-Hydraulik-Additiv [%] | 600N [wt%] | 100N [wt%] |
|---|---|---|---|---|
| Beispiel 12 | 8,3 | 0,6 | 18,5 | 72,6 |
| Vergleichs-beispiel 6 | 2,6 | 0,6 | 34,4 | 62,4 |

Tabelle 6 (Fortsetzung)

| Polymer gemäß | KV100 [mm²/s] | KV40 [mm²/s] | VI | PSSI nach DIN 51350 Teil 6 (20h Kegelrollenlager) |
|---|---|---|---|---|
| Beispiel 12 | 8,48 | 46,41 | 161 | 19,2 |
| Vergleichs-beispiel 6 | 8,51 | 46,8 | 161 | 17,4 |

**Patentansprüche**

1. Kammpolymer umfassend in der Hauptkette
   Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind, **dadurch gekennzeichnet, dass** der molare Verzweigungsgrad im Bereich von 0,1 bis 10 Mol.-% liegt und das Kammpolymer in Summe mindestens 80 Gew.-%, bezogen auf das Gewicht der Wiederholungseinheiten, an Wiederholungseinheiten, die von Polyolefin-basierten Makromonomeren abgeleitet sind, und Wiederholungseinheiten, die von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind, umfasst und dass die Hauptkette eine Glastemperatur im Bereich -30 bis 100°C aufweist.

2. Kammpolymer gemäß Anspruch 1, **dadurch gekennzeichnet, dass** die Wiederholungseinheiten, die von Polyolefin basierten Makromonomeren abgeleitet sind, ein Zahlenmittel des Molekulargewicht im Bereich von 700 bis 10000 g/mol aufweisen.

3. Kammpolymer gemäß mindestens einem der vorhergehenden Ansprüche, **dadurch gekennzeichnet, dass** das Kammpolymer mindestens 90 Gew.-% Wiederholungseinheiten umfasst, die von Polyolefin-basierten Makromonomeren abgeleitet sind und von niedermolekularen Monomeren ausgewählt aus der Gruppe bestehend aus Styrolmonomeren mit 8 bis 17 Kohlenstoffatomen, Alkyl(meth)acrylaten mit 1 bis 10 Kohlenstoffatomen in der Alkoholgruppe, Vinylestern mit 1 bis 11 Kohlenstoffatomen in der Acylgruppe, Vinylethern mit 1 bis 10 Kohlenstoffatomen in der Alkoholgruppe, (Di)alkylfumaraten mit 1 bis 10 Kohlenstoffatomen in der Alkoholgruppe, (Di)alkylmaleate mit 1 bis 10 Kohlenstoffatomen in der Alkoholgruppe sowie Mischungen dieser Monomeren abgeleitet sind.

4. Kammpolymer gemäß mindestens einem der vorhergehenden Ansprüche, **dadurch gekennzeichnet, dass** der molare Verzweigungsgrad im Bereich 0.8% bis 6.0% liegt.

5. Kammpolymer gemäß Anspruch 4, **dadurch gekennzeichnet, dass** der molare Verzweigungsgrad im Bereich 0.8% bis 3.4% liegt.

6. Kammpolymer gemäß mindestens einem der vorhergehenden Ansprüche, **dadurch gekennzeichnet, dass** die Jodzahl kleiner oder gleich 0,2 g pro g Kammpolymer ist.

7. Kammpolymer gemäß mindestens einem der vorhergehenden Ansprüche, **dadurch gekennzeichnet, dass** die von Polyolefin-basierten Makromonomeren abgeleiteten Wiederholungseinheiten Gruppen umfassen, die von Monomeren ausgewählt aus der Gruppe bestehend aus C2-C10-Alkenen und/oder C4-C10-Alkadienen abgeleitet sind.

8. Kammpolymer gemäß Anspruch 7, **dadurch gekennzeichnet, dass** die von Polyolefin-basierten Makromonomeren abgeleiteten Wiederholungseinheiten mindestens 80 Gew.-% Gruppen umfassen, die von Monomeren ausgewählt aus der Gruppe bestehend aus C2-C10-Alkenen und/oder C4-C10-Alkadienen abgeleitet sind, bezogen auf das Gewicht der von Polyolefin-basierten Makromonomeren abgeleiteten Wiederholungseinheiten.

9. Kammpolymer gemäß mindestens einem der vorhergehenden Ansprüche, **dadurch gekennzeichnet, dass** die von Polyolefin-basierten Makromonomeren abgeleiteten Wiederholungseinheiten Gruppen umfassen, die von nicht-olefinischen Monomeren ausgewählt aus der Gruppe aus Styrolen, (Meth)acrylaten, Vinylestern, Vinylethem, Fumaraten und Maleaten abgeleitet sind.

10. Kammpolymer gemäß Anspruch 9, **dadurch gekennzeichnet, dass** die von Polyolefin-basierten Makromonomeren abgeleiteten Wiederholungseinheiten höchstens 20 Gew.-% Gruppen umfassen, die von nicht-olefinischen Monomeren ausgewählt aus der Gruppe aus Styrolen, (Meth)acrylaten, Vinylestern, Vinylethern, Fumaraten und Maleaten abgeleitet sind, bezogen auf das Gewicht der Wiederholungseinheiten.

11. Kammpolymer gemäß mindestens einem der vorhergehenden Ansprüche, **dadurch gekennzeichnet, dass** die Schmelztemperatur der von Polyolefin-basierten Makromonomeren abgeleiteten Wiederholungseinheiten kleiner oder gleich -10°C ist.

12. Kammpolymer gemäß mindestens einem der vorhergehenden Ansprüche, **dadurch gekennzeichnet, dass** keine Schmelztemperatur der von Polyolefin-basierten Makromonomeren abgeleiteten Wiederholungseinheiten gemessen werden kann.

13. Kammpolymer gemäß mindestens einem der vorhergehenden Ansprüche, **dadurch gekennzeichnet, dass** das Kammpolymer Wiederholungseinheiten aufweist, die von Styrol abgeleitet sind, und Wiederholungseinheiten aufweist, die von n-Butylmethacrylat abgeleitet sind.

14. Kammpolymer gemäß mindestens einem der vorhergehenden Ansprüche, **dadurch gekennzeichnet, dass** das Kammpolymer Wiedefiolungseinheiten aufweist, die von Styrol abgeleitet sind, und WiederholUngseinheiten aufweist, die von n-Butylacrylat abgeleitet sind.

15. Kammpolymer gemäß mindestens einem der vorhergehenden Ansprüche, **dadurch gekennzeichnet, dass** das Kammpolymer Wiedefiolungseinheiten aufweist, die von Methylmethacrylat abgeleitet sind, und Wiederholungseinheiten aufweist, die von n-Butylmethacrylat abgeleitet sind.

16. Verfahren zur Herstellung von Kammpolymeren gemäß mindestens einem der vorhergehenden Ansprüche 1 bis 15, **dadurch gekennzeichnet, dass** Makromonomere und niedermolekulare Monomere copolymerisiert werden.

**17.** Verfahren zur Herstellung von Kammpolymeren gemäß mindestens einem der vorhergehenden Ansprüche 1 bis 15, **dadurch gekennzeichnet, dass** zunächst ein funktionalisiertes Hauptkettenpolymer hergestellt wird, welches aus niedermolekularen Monomeren gebildet wird, und anschließend das hergestellte Hauptkettenpolymer durch eine polymeranaloge Reaktion umgesetzt wird.

**18.** Verfahren gemäß Anspruch 17, **dadurch gekennzeichnet, dass** die polymeranaloge Reaktion eine Alkoholyse durch Makroalkohole und/oder eine Aminolyse durch Makroamine ist.

**19.** Verfahren gemäß Anspruch 18, **dadurch gekennzeichnet, dass** das Hauptkettenpolymer Säuregruppen, Amidgruppen, Estergruppen und/oder Säureanhydridgruppen umfasst

**20.** Verfahren gemäß mindestens einem der vorhergehenden Ansprüche 16 bis 19, **dadurch gekennzeichnet, dass** das Verfahren diskontinuierlich durchgeführt wird.

**21.** Verfahren gemäß mindestens einem der vorhergehenden Ansprüche 16 bis 20, **dadurch gekennzeichnet, dass** die Umsetzung in Gegenwart eines lösungsvermittelnden Trägermediums durchgeführt wird.

**22.** Verfahren gemäß Anspruch 21, **dadurch gekennzeichnet, dass** das Trägermedium aus der Gruppe der Gasöle und/oder der aromatischen Kohlenwasserstoffe ausgewählt ist.

**23.** Verfahren gemäß mindestens einem der vorhergehenden Ansprüche 16 bis 22, **dadurch gekennzeichnet, dass** die Umsetzung frei von Reglern durchgeführt wird.

**24.** Schmierölformulierung enthaltend Kammpolymere gemäß mindestens einem der vorhergehenden Ansprüche 1 bis 15.

**25.** Schmierölformulierung gemäß Anspruch 24, **dadurch gekennzeichnet, dass** die Schmierölformulierung Basisöle der API Gruppe I, II, III, IV und/oder Gruppe V umfasst.

**26.** Schmierölformulierung gemäß Anspruch 24 oder 25, **dadurch gekennzeichnet, dass** der Viskositätsindex mindestens 200 beträgt.

**27.** Schmierölformulierung gemäß mindestens einem der Ansprüche 24 bis 26, **dadurch gekennzeichnet, dass** der PSSI nach ASTM D2603 Ref. B kleiner oder gleich 45 ist.

**28.** Schmierölformulierung gemäß mindestens einem der Ansprüchen 24 bis 27, **dadurch gekennzeichnet, dass** die Schmierölformulierung mindestens ein zusätzliches Additiv umfasst, das keine Kammpolymere gemäß den Ansprüchen 1 bis 15 darstellt.

**29.** Schmierölformulierung gemäß Anspruch 28, **dadurch gekennzeichnet, dass** das Additiv ein Viskositätsindexverbesserer, Stockpunktverbesserer, Dispergierhilfsmittel und/oder Reibveränderer (friction modifier) darstellt.

**30.** Schmierölformulierung gemäß Anspruch 28 oder 29, **dadurch gekennzeichnet, dass** das Additiv auf einem linearen Polyalkyl(meth)acrylat mit 1 bis 30 Kohlenstoffatomen in der Alkoholgruppe basiert.

**31.** Verwendung von Kammpolymeren gemäß mindestens einem der vorhergehenden Ansprüche 1 bis 15 als Viskositätsindexverbesserer, Stockpunktverbesserer, Dispergierhilfsmittel und/oder Reibveränderer.

**Claims**

**1.** Comb polymer comprising, in the main chain, repeat units which are derived from polyolefin-based macromonomers, and repeat units which are derived from low molecular weight monomers selected from the group consisting of styrene monomers having from 8 to 17 carbon atoms, alkyl (meth)acrylates having from 1 to 10 carbon atoms in the alcohol group, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di) alkyl maleates having from 1 to 10 carbon atoms in the alcohol group, and mixtures of these monomers, **characterized in that** the molar degree of branching is in the range from 0.1 to 10 mol% and the comb polymer comprises a total of at least 80% by weight, based on the weight of the repeat units, of repeat units which are derived from polyolefin-based macromonomers, and repeat units which are derived from low molecular weight monomers selected from the group consisting of styrene monomers having from 8 to 17 carbon atoms, alkyl (meth)acrylates having from 1 to 10 carbon atoms in the alcohol group, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, and mixtures of these monomers, and **in that** the main chain has a glass transition temperature in the range from -30 to 100°C.

2. Comb polymer according to Claim 1, **characterized in that** the repeat units which are derived from polyolefin-based macromonomers have a number-average molecular weight in the range from 700 to 10 000 g/mol.

3. Comb polymer according to at least one of the preceding claims, **characterized in that** the comb polymer comprises at least 90% by weight of repeat units which are derived from polyolefin-based macromonomers and are derived from low molecular weight monomers selected from the group consisting of styrene monomers having from 8 to 17 carbon atoms, alkyl (meth)acrylates having from 1 to 10 carbon atoms in the alcohol group, vinyl esters having from 1 to 11 carbon atoms in the acyl group, vinyl ethers having from 1 to 10 carbon atoms in the alcohol group, (di)alkyl fumarates having from 1 to 10 carbon atoms in the alcohol group, (di)alkyl maleates having from 1 to 10 carbon atoms in the alcohol group, and mixtures of these monomers.

4. Comb polymer according to at least one of the preceding claims, **characterized in that** the molar degree of branching is in the range from 0.8% to 6.0%.

5. Comb polymer according to Claim 4, **characterized in that** the molar degree of branching is in the range from 0.8% to 3.4%.

6. Comb polymer according to at least one of the preceding claims, **characterized in that** the iodine number is less than or equal to 0.2 g per g of comb polymer.

7. Comb polymer according to at least one of the preceding claims, **characterized in that** the repeat units derived from polyolefin-based macromonomers comprise groups which are derived from monomers selected from the group consisting of C2-C10-alkenes and/or C4-C10-alkadienes.

8. Comb polymer according to Claim 7, **characterized in that** the repeat units derived from polyolefin-based macromonomers comprise at least 80% by weight of groups which are derived from monomers selected from the group consisting of C2-C10-alkenes and/or C4-C10-alkadienes, based on the weight of the repeat units derived from polyolefin-based macromonomers.

9. Comb polymer according to at least one of the preceding claims, **characterized in that** the repeat units derived from polyolefin-based macromonomers comprise groups which are derived from non-olefinic monomers selected from the group of styrenes, (meth)acrylates, vinyl esters, vinyl ethers, fumarates and maleates.

10. Comb polymer according to Claim 9, **characterized in that** the repeat units derived from polyolefin-based macromonomers comprise at most 20% by weight of groups which are derived from non-olefinic monomers selected from the group of styrenes, (meth)acrylates, vinyl esters, vinyl ethers, fumarates and maleates, based on the weight of the repeat units.

11. Comb polymer according to at least one of the preceding claims, **characterized in that** the melting point of the repeat units derived from polyolefin-based macromonomers is less than or equal to -10°C.

12. Comb polymer according to at least one of the preceding claims, **characterized in that** no melting point of the repeat units derived from polyolefin-based macromonomers can be measured.

13. Comb polymer according to at least one of the preceding claims, **characterized in that** the comb polymer has repeat units which are derived from styrene, and repeat units which are derived from n-butyl methacrylate.

14. Comb polymer according to at least one of the preceding claims, **characterized in that** the comb polymer has repeat units which are derived from styrene, and repeat units which are derived from n-butyl acrylate.

15. Comb polymer according to at least one of the preceding claims, **characterized in that** the comb polymer has repeat units which are derived from methyl methacrylate and repeat units which are derived from n-butyl methacrylate.

16. Process for preparing comb polymers according to at least one of the preceding Claims 1 to 15, **characterized in that** macromonomers and low molecular weight monomers are copolymerized.

17. Process for preparing comb polymers according to at least one of the preceding Claims 1 to 15, **characterized in that** a functionalized main chain polymer is first prepared, which is formed from low molecular weight monomers, and then the main chain polymer prepared is reacted by a polymer-analogous reaction.

18. Process according to Claim 17, **characterized in that** the polymer-analogous reaction is an alcoholysis by macroalcohols and/or an aminolysis by macroamines.

19. Process according to Claim 18, **characterized in that** the main chain polymer comprises acid groups, amide groups, ester groups and/or acid anhydride groups.

20. Process according to at least one of the preceding Claims 16 to 19, **characterized in that** the process is performed batchwise.

21. Process according to at least one of the preceding Claims 16 to 20, **characterized in that** the reaction is performed in the presence of a solubilizing carrier medium.

22. Process according to Claim 21, **characterized in that** the carrier medium is selected from the group of the gas oils and/or the aromatic hydrocarbons.

23. Process according to at least one of the preceding Claims 16 to 22, **characterized in that** the reaction is performed free of regulators.

24. Lubricant oil formulation comprising comb polymers according to at least one of the preceding Claims 1 to 15.

25. Lubricant oil formulation according to Claim 24, **characterized in that** the lubricant oil formulation comprises base oils of API group I, II, III, IV and/or group V.

26. Lubricant oil formulation according to Claim 24 or 25, **characterized in that** the viscosity index is at least 200.

27. Lubricant oil formulation according to at least one of Claims 24 to 26, **characterized in that** the PSSI to ASTM D2603 Ref. B is less than or equal to 45.

28. Lubricant oil formulation according to at least one of Claims 24 to 27, **characterized in that** the lubricant oil formulation comprises at least one additional additive which is not a comb polymer according to Claims 1 to 15.

29. Lubricant oil formulation according to Claim 28, **characterized in that** the additive is a viscosity index improver, pour point improver, dispersing assistant and/or friction modifier.

30. Lubricant oil formulation according to Claim 28 or 29, **characterized in that** the additive is based on a linear polyalkyl (meth)acrylate having from 1 to 30 carbon atoms in the alcohol group.

31. Use of comb polymers according to at least one of the preceding Claims 1 to 15 as viscosity index improvers, pour point improvers, dispersing assistants and/or friction modifiers.

**Revendications**

1. Polymère en peigne comprenant, dans la chaîne principale, des unités répétitives qui sont dérivées de macromonomères à base de polyoléfine et des unités répétitives qui sont dérivées de monomères de bas poids moléculaire, choisis dans le groupe constitué par les monomères de type styrène, comprenant 8 à 17 atomes de carbone, les (méth)acrylates d'alkyle comprenant 1 à 10 atomes de carbone dans le groupe alcool, les esters de vinyle comprenant 1 à 11 atomes de carbone dans le groupe acyle, les vinyléthers comprenant 1 à 10 atomes de carbone dans le groupe alcool, les fumarates de (di) alkyle comprenant 1 à 10 atomes de carbone dans le groupe alcool, les maléates de (di)alkyle comprenant 1 à 10 atomes de carbone dans le groupe alcool ainsi que des mélanges de ces monomères, **caractérisé en ce que** le degré de ramification molaire se situe dans la plage de 0,1 à 10% en mole et le polymère en peigne comprend, au total, au moins 80% en poids, par rapport au poids des unités répétitives, d'unités répétitives qui sont dérivées de macromonomères à base de polyoléfine et d'unités répétitives qui sont dérivées de monomères de bas poids moléculaire, choisis dans le groupe constitué par les monomères de type styrène, comprenant 8 à 17 atomes de carbone, les (méth)acrylates d'alkyle comprenant 1 à 10 atomes de carbone dans le groupe alcool, les esters de vinyle comprenant 1 à 11 atomes de carbone dans le groupe acyle, les vinyléthers comprenant 1 à 10 atomes de carbone dans le groupe alcool, les fumarates de (di)alkyle comprenant 1 à 10 atomes de carbone dans le groupe alcool, les maléates de (di) alkyle comprenant 1 à 10 atomes de carbone dans le groupe alcool ainsi que des mélanges de ces monomères et **en ce que** la chaîne principale présente une température de transition vitreuse dans la plage de -30 à 100°C.

2. Polymère en peigne selon la revendication 1, **caractérisé en ce que** les unités répétitives qui sont dérivées de macromonomères à base de polyoléfine présentent une moyenne numérique du poids moléculaire dans la plage de 700 à 10 000 g/mole.

3. Polymère en peigne selon au moins l'une quelconque des revendications précédentes, **caractérisé en ce que** le polymère en peigne comprend au moins 90% en poids d'unités répétitives qui sont dérivées de macromonomères à base de polyoléfine et d'unités répétitives qui sont dérivées de monomères de bas poids moléculaire, choisis dans le groupe constitué par les monomères de type styrène, comprenant 8 à 17 atomes de carbone, les (méth)acrylates d'alkyle comprenant 1 à 10 atomes de carbone dans le groupe alcool, les esters de vinyle comprenant 1 à 11 atomes de carbone dans le groupe acyle, les vinyléthers comprenant 1 à 10 atomes de carbone dans le groupe alcool, les fumarates de (di) alkyle comprenant 1 à 10 atomes de carbone dans le groupe alcool, les maléates de (di)alkyle comprenant 1 à 10 atomes de carbone dans le groupe alcool ainsi que des mélanges de ces monomères.

4. Polymère en peigne selon au moins l'une quelconque des revendications précédentes, **caractérisé en ce que** le degré de ramification molaire se situe dans la plage de 0,8% à 6,0%.

5. Polymère en peigne selon la revendication 4, **caractérisé en ce que** le degré de ramification molaire se situe dans la plage de 0,8% à 3,4%.

6. Polymère en peigne selon au moins l'une quelconque des revendications précédentes, **caractérisé en ce que** l'indice d'iode est plus petit ou égal à 0,2 g par g de polymère en peigne.

7. Polymère en peigne selon au moins l'une quelconque des revendications précédentes, **caractérisé en ce que** les unités répétitives dérivées de macromonomères à base de polyoléfine comprennent des groupes qui sont dérivés de monomères choisis dans le groupe constitué par les $C_2$-$C_{10}$-alcènes et/ou les $C_4$-$C_{10}$-alcadiènes.

8. Polymère en peigne selon la revendication 7, **caractérisé en ce que** les unités répétitives dérivées de macromonomères à base de polyoléfine comprennent au moins 80% en poids de groupes qui sont dérivés de monomères choisis dans le groupe constitué par les $C_2$-$C_{10}$-alcènes et/ou les $C_4$-$C_{10}$-alcadiènes, par rapport au poids des unités répétitives dérivées de macromonomères à base de polyoléfine.

9. Polymère en peigne selon au moins l'une quelconque des revendications précédentes, **caractérisé en ce que** les unités répétitives dérivées de macromonomères à base de polyoléfine comprennent des groupes qui sont dérivés de monomères non oléfiniques choisis dans le groupe des styrènes, des (méth)acrylates, des esters de vinyle, des vinyléthers, des fumarates et des maléates.

10. Polymère en peigne selon la revendication 9, **caractérisé en ce que** les unités répétitives dérivées de macromonomères à base de polyoléfine comprennent au plus 20% en poids de groupes qui sont dérivés de monomères non oléfiniques choisis dans le groupe des styrènes, des (méth)acrylates, des esters de vinyle, des vinyléthers, des fumarates et des maléates, par rapport au poids des unités répétitives.

11. Polymère en peigne selon au moins l'une quelconque des revendications précédentes, **caractérisé en ce que** la température de fusion des unités répétitives dérivées de macromonomères à base de polyoléfine est inférieure ou égale à -10°C.

**12.** Polymère en peigne selon au moins l'une quelconque des revendications précédentes, **caractérisé en ce qu'**on ne peut pas mesurer de température de fusion des unités répétitives dérivées de macromonomères à base de polyoléfine.

**13.** Polymère en peigne selon au moins l'une quelconque des revendications précédentes, **caractérisé en ce que** le polymère en peigne présente des unités répétitives dérivées de styrène et présente des unités répétitives dérivées de méthacrylate de n-butyle.

**14.** Polymère en peigne selon au moins l'une quelconque des revendications précédentes, **caractérisé en ce que** le polymère en peigne présente des unités répétitives dérivées de styrène et présente des unités répétitives dérivées d'acrylate de n-butyle.

**15.** Polymère en peigne selon au moins l'une quelconque des revendications précédentes, **caractérisé en ce que** le polymère en peigne présente des unités répétitives dérivées de méthacrylate de méthyle et présente des unités répétitives dérivées de méthacrylate de n-butyle.

**16.** Procédé pour la préparation de polymères en peigne selon au moins l'une quelconque des revendications précédentes 1 à 15, **caractérisé en ce que** les macromonomères et les monomères de bas poids moléculaire sont copolymérisés.

**17.** Procédé pour la préparation de polymères en peigne selon au moins l'une quelconque des revendications précédentes 1 à 15, **caractérisé en ce qu'**on prépare d'abord un polymère de chaîne principale fonctionnalisé, qui est formé à partir de monomères de bas poids moléculaire et le polymère de chaîne principale préparé est ensuite transformé par une réaction analogue à un polymère.

**18.** Procédé selon la revendication 17, **caractérisé en ce que** la réaction analogue à un polymère est une alcoolyse par des macroalcools et/ou une aminolyse par des macroamines.

**19.** Procédé selon la revendication 18, **caractérisé en ce que** le polymère de chaîne principale comprend des groupes acide, amide, ester et/ou anhydride d'acide.

**20.** Procédé selon au moins l'une quelconque des revendications précédentes 16 à 19, **caractérisé en ce que** le procédé est réalisé de manière discontinue.

**21.** Procédé selon au moins l'une quelconque des revendications précédentes 16 à 20, **caractérisé en ce que** la transformation est réalisée en présence d'un milieu support promoteur de solubilisation.

**22.** Procédé selon la revendication 21, **caractérisé en ce que** le milieu support est choisi dans le groupe des gasoils et/ou des hydrocarbures aromatiques.

**23.** Procédé selon au moins l'une quelconque des revendications précédentes 16 à 22, **caractérisé en ce que** la transformation est réalisée en l'absence d'agents de régulation.

**24.** Formulation d'huile lubrifiante contenant des polymères en peigne selon au moins l'une quelconque des revendications 1 à 15.

**25.** Formulation d'huile lubrifiante selon la revendication 24, **caractérisée en ce que** la formulation d'huile lubrifiante comprend des huiles de base du groupe API I, II, III, IV et/ou V.

**26.** Formulation d'huile lubrifiante selon la revendication 24 ou 25, **caractérisée en ce que** l'indice de viscosité est d'au moins 200.

**27.** Formulation d'huile lubrifiante selon au moins l'une quelconque des revendications 24 à 26, **caractérisée en ce que** l'indice de stabilité au cisaillement permanent (PSSI) selon la norme ASTM D2603 Réf. B est inférieur ou égal à 45.

**28.** Formulation d'huile lubrifiante selon au moins l'une quelconque des revendications 24 à 27, **caractérisée en ce que** la formulation d'huile lubrifiante comprend au moins un additif supplémentaire qui ne présente pas de polymères en peigne selon les revendications 1 à 15.

29. Formulation d'huile lubrifiante selon la revendication 28, **caractérisée en ce que** l'additif représente un agent d'amélioration de l'indice de viscosité, un agent d'amélioration de l'indice de figeage, un adjuvant de dispersion et/ou un agent de modification de la friction ("friction modifier").

30. Formulation d'huile lubrifiante selon la revendication 28 ou 29, **caractérisée en ce que** l'additif est à base d'un poly((méth)acrylate d'alkyle) linéaire comprenant 1 à 30 atomes de carbone dans le groupe alcool.

31. Utilisation de polymères en peigne selon au moins l'une quelconque des revendications précédentes 1 à 15 comme agent d'amélioration de l'indice de viscosité, agent d'amélioration du point de figeage, adjuvant de dispersion et/ou agent de modification de la friction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0637332 A
- EP 0937769 A
- EP 0979834 A
- US 3702300 A
- EP 0969077 A
- EP 0744457 A
- EP 0621293 A
- EP 0699694 A
- US 5002676 A
- US 4788361 A
- DE 19631170
- EP 0955320 A
- US 5625005 A

- WO 9630421 A
- WO 9747661 A
- WO 9718247 A
- WO 9840415 A
- WO 9910387 A
- WO 9801478 A
- WO 2004083169 A
- EP 0244616 A
- WO 2004067583 A
- EP 0628575 A
- EP 0277345 A
- GB 2270317 A


**In der Beschreibung aufgeführte Nicht-Patentliteratur**

- Chemistry and Technology of Lubricants. Blackie Academic & Professional, 1993, 124-159165-167
- **J. BARTZ.** Additive für Schmierstoffe. Expert-Verlag, 1994, 197-252
- **P. CALLAIS ; S. SCHMIDT ; N. MACY.** *SAE Technical Paper Series, No. 2004-01-3047*

- **J-S. WANG et al.** *J.Am.Chem.Soc.,* 1995, vol. 117, 5614-5615
- **MATYJASZEWSKI.** *Macromolecules,* 1995, vol. 28, 7901-7910
- lubricants and related products. **STICHWORT.** Ullmanns Encyclopedia of Industrial Chemistry. 1997